(19) Europäisches Patentamt | European Patent Office | Office européen des brevets

(11) **EP 4 016 026 B1**

(12) **FASCICULE DE BREVET EUROPEEN**

(45) Date de publication et mention de la délivrance du brevet:
**27.11.2024 Bulletin 2024/48**

(21) Numéro de dépôt: **21214849.8**

(22) Date de dépôt: **15.12.2021**

(51) Classification Internationale des Brevets (IPC):
**G01L 1/14** *(2006.01)*  **G01L 1/20** *(2006.01)*
**G01L 1/22** *(2006.01)*  **G01L 5/162** *(2020.01)*
**G01L 5/165** *(2020.01)*

(52) Classification Coopérative des Brevets (CPC):
**G01L 5/162; G01L 1/146; G01L 1/205;**
**G01L 1/2206; G01L 5/165**

(54) **CAPTEUR DE FORCE**

KRAFTAUFNEHMER

FORCE SENSOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.12.2020 FR 2013360**

(43) Date de publication de la demande:
**22.06.2022 Bulletin 2022/25**

(73) Titulaire: **Commissariat à l'Energie Atomique et aux Energies Alternatives**
**75015 Paris (FR)**

(72) Inventeurs:
• **ALOUI, Saifeddine**
**38054 GRENOBLE Cedex 09 (FR)**
• **VIAL, Franck**
**38054 GRENOBLE Cedex 09 (FR)**

(74) Mandataire: **Cabinet Nony**
**11 rue Saint-Georges**
**75009 Paris (FR)**

(56) Documents cités:
**JP-A- 2006 305 658    US-A1- 2009 200 815**

## Description

### Domaine technique

La présente invention concerne les capteurs de force, et plus particulièrement ceux adaptés à mesurer une force de contact.

### Technique antérieure

La perception tactile est importante pour certaines applications de robotique. Pour permettre à des robots d'effectuer des tâches proches de celles de l'homme, par exemple celles impliquant de tenir et/ou manipuler un objet, il est désirable de savoir détecter le contact d'un objet extérieur avec une surface et d'en mesurer certaines propriétés, notamment le module, les coordonnées dans les trois dimensions du vecteur force exercé sur la zone de contact et/ou le moment de cette force, voire leur distribution spatiale.

Le brevet US10067019B2 décrit un capteur comportant des jauges de contrainte montées sur des poutres déformables permettant de mesurer la force totale ainsi que le moment des forces appliquées sur le capteur.

La demande JP2020016444A décrit un capteur ayant une surface de détection définie par un dôme, reposant à sa base sur une structure de détection plane multipoint, permettant de connaître les contraintes de réaction s'exerçant localement sur la structure de détection en réponse à l'application d'une force sur le dôme.

Le brevet EP1617197B1 divulgue un autre type de capteur, de type « clou », comportant une tige rigide sur laquelle une force peut venir s'exercer, ladite force pouvant être mesurée grâce à un élément déformable solidaire de la tige et portant des moyens de mesure.

Le brevet US9372588B2 décrit un capteur tactile comportant des cellules de détection piézo-résistives ayant une répartition matricielle, afin de mesurer la distribution de pression sur une surface plane. Un tel capteur permet uniquement de capturer des efforts normaux à la surface de contact, et non les composantes dans l'espace de la force et/ou de son moment.

Il est en outre connu d'utiliser des moyens optiques pour mesurer certaines propriétés d'un contact avec un objet extérieur. Le brevet US8411140B2 divulgue un capteur tactile comportant une couche d'élastomère transparent et déformable recouvert d'un revêtement réfléchissant illuminé à travers l'élastomère par des sources lumineuses de type LED. Une caméra est placée derrière la couche déformable afin de visualiser la forme en 3D du contact sur le capteur, permettant d'obtenir une mesure géométrique résolue de la surface de l'objet touché par le capteur. Ce dernier présente l'inconvénient d'être de taille relativement imposante, limitant son utilisation à certaines applications.

Le brevet US8272278B2 décrit un système hybride qui permet de mesurer plusieurs propriétés du contact avec un objet. Ce système permet entre autres d'obtenir la distribution de force sur la surface de contact grâce à des électrodes portées par un support rigide mesurant l'impédance électrique d'un fluide conducteur placé entre une couche élastique imitant une peau artificielle et le support. La réalisation de ce capteur est relativement complexe et se heurte à des contraintes d'étanchéité dues à l'utilisation du fluide.

D'autres exemples de réalisations sont décrites par les documents US2009/200815A1 et JP2006 305658A qui divulguent chacun un doigt de robot muni à son extrémité d'un capteur tactile de pression recouvert d'une couche flexible.

### Exposé de l'invention

Il existe par conséquent un besoin pour perfectionner encore les capteurs de force, notamment afin de disposer d'un capteur de réalisation relativement simple et peu onéreuse, compatible avec une fabrication à large échelle, et permettant de mesurer à la fois une distribution de force exercée sur une surface de contact et/ou les composantes dans l'espace de la force ou de son moment, si cela est recherché.

### Résumé de l'invention

L'invention vise à répondre à ce besoin, et elle y parvient en proposant un capteur de force selon la revendication 1.

Le capteur selon l'invention est relativement simple à réaliser, et permet une mesure fiable d'une force s'appliquant sur la surface de détection.

Cavité

La cavité peut avoir diverses géométries, en fonction de l'application et des composantes de la force que l'on cherche à mesurer.

De préférence, la cavité a la forme d'un polyèdre, notamment un pavé, par exemple de forme cubique ou parallélépipédique rectangle. Une telle forme présente l'avantage d'avoir un fond et des montants perpendiculaires au fond, ce qui peut simplifier les calculs des composantes de la force. De préférence, au moins trois surfaces d'une telle cavité sont munies de structures de détection, notamment sur le fond et sur deux montants opposés.

En variante, la cavité est de forme cylindrique, notamment cylindrique de révolution.

Le capteur peut comporter un support rigide creux portant lesdites structures de détection. Ce support peut être réalisé en métal, verre, céramique ou en matière plastique, entre autres matériaux utilisables.

Milieu élastiquement déformable

Le milieu élastiquement déformable peut remplir la cavité de manière à venir à affleurement de son ouverture. En variante, le milieu élastiquement déformable s'étend hors de la cavité. Par exemple, et notamment lorsque le milieu élastiquement déformable s'étend hors de la cavité, la surface de détection définie par le milieu élastiquement déformable présente une forme convexe vers l'extérieur, par exemple une forme de dôme, se rapprochant par exemple de la forme de la pulpe d'un doigt, de champignon ou de picot. Le milieu élastiquement déformable présente de préférence un comportement élastique isotrope. En particulier, il peut être homogène.

Le milieu élastiquement déformable présente par exemple une dureté sur l'échelle Shore comprise entre 30 et 95, mieux entre 40 et 80.

Le milieu élastiquement déformable peut être un élastomère, par exemple un élastomère thermoplastique introduit à l'état fluide dans la cavité, ou un élastomère ayant polymérisé dans la cavité. Il s'agit par exemple d'un polyuréthane, mais d'autres matériaux peuvent convenir, par exemple des élastomères thermoplastiques ou des silicones.

Structures de détection

Le capteur comporte au moins deux structures de détection, et de préférence autant de structures de détection que la cavité présente de faces ayant des orientations différentes. Le terme « orientation » désigne la direction du vecteur normal à la surface. Deux surfaces planes parallèles et opposées auront ainsi des orientations différentes, car opposées.

Dans le cas d'une cavité sous forme de pavé, le capteur comporte de préférence cinq structures de détection, à savoir une sur le fond de la cavité, et quatre autres sur les montants de la cavité.

Les structures de détection peuvent être multipoint de mesure ou mono-point de mesure. Par « multipoint » il faut comprendre que la structure de détection est configurée pour mesurer la pression qui s'applique dessus en au moins deux points distincts. Par « mono-point », il faut comprendre que la structure de détection ne permet de mesurer la pression appliquée qu'en un point de la structure de détection, de préférence en son centre.

Dans le cas d'une détection multipoint, la détection s'effectue de préférence en des points régulièrement distribués sur la structure de détection, par exemple régulièrement espacés sur la largeur et la hauteur de la structure de détection, les points de mesure étant par exemple disposés comme les intersections d'un quadrillage.

Selon un exemple de mise en oeuvre de l'invention, au moins l'une des structures de détection est multipoint de mesure, et de préférence toutes les structures de détection sont multipoint de mesure. Cela permet avec une cavité unique d'avoir une précision de détection permettant de connaître non seulement l'orientation de la force mais également le couple s'exerçant sur la surface de détection, grâce à la connaissance des distributions de pression sur les surfaces de détection.

Selon un autre exemple de mise en oeuvre de l'invention, au moins l'une des structures de détection est mono-point de mesure. Dans ce cas, le capteur comporte par exemple une pluralité de cavités dites unitaires, munies chacune de structures de détection mono-point. Les structures de détection peuvent être réalisées de diverses manières, sachant que toute structure de détection adaptée à délivrer un signal représentatif de la pression exercée dessus peut convenir.

Ainsi, l'une au moins des structures de détection peut comporter au moins une jauge de contrainte.

L'une au moins des structures de détection peut comporter des moyens de détection piézo-résistifs ou capacitifs.

De préférence, les structures de détections sont piézo-résistives, de telles structures étant économiques à réaliser. Dans ce cas, la pression appliquée en un point de mesure s'accompagne d'une variation de résistance électrique entre au moins deux électrodes de mesure.

L'une au moins des structures de détection, et notamment chaque structure de détection, peut comporter :

o au moins une première électrode disposée sur la face de la structure de détection du côté d'un support sous-jacent, notamment en contact avec celui-ci, et
o au moins une deuxième électrode disposée sur la face de la structure de détection du côté du milieu élastiquement déformable, notamment en contact avec celui-ci.

Ces électrodes peuvent être séparées par une ou plusieurs couches d'un ou plusieurs matériaux, de telle sorte qu'une pression exercée en un point de mesure s'accompagne d'une variation de l'impédance entre les électrodes.

De préférence, les première et deuxième électrodes se superposent au moins partiellement. Le lieu de superposition des électrodes peut coïncider avec un point de mesure.

Les première et deuxième électrodes ont de préférence chacune une forme linéaire, notamment dans une région de croisement des électrodes. Par exemple, les premières et deuxièmes électrodes se croisent à angle droit, appartenant chacune à un ensemble d'électrodes parallèles entre elles, les deux ensembles d'électrodes se croisant comme les lignes d'un quadrillage lorsque la structure de détection est observée de dessus par transparence. Un tel agencement permet une lecture en des points de mesure définis par les intersections du quadrillage, par adressage du type sélection de ligne et sélection de colonne. Ainsi, au moins l'une des structures de détection, mieux chacune d'entre elles, peut comporter :

   o Une pluralité de premières électrodes disposées sur la face de la structure de détection du côté d'un support sous-jacent, notamment en contact avec celui-ci, et

   o une pluralité de deuxièmes électrodes disposées sur la face de la structure de détection du côté du milieu élastiquement déformable, notamment en contact avec celui-ci.

Les premières électrodes peuvent comporter des portions parallèles espacées, les deuxièmes électrodes comportant des portions parallèles espacées croisant, en vue de face, les premières portions, notamment leur étant perpendiculaires.

Les électrodes des structures de détection peuvent être réalisées par toute technique adaptée, notamment par gravure ou impression, par exemple par sérigraphie.

Par exemple, la ou les premières électrodes sont imprimées sur une première couche de matériau faiblement conducteur, la ou les deuxièmes électrodes sont imprimées sur une deuxième couche de matériau faiblement conducteur, les première et deuxième couches étant par la suite assemblées de façon à ce que les électrodes soient sur les faces extérieures de l'ensemble. Dans ce cas, une pression exercée en un point de mesure comprime les deux couches entre elles et réduit la résistance de contact, cette baisse de la résistance pouvant être détectée. Une telle variante est avantageuse en ce qu'elle est particulièrement économique à réaliser.

En variante, les première(s) et deuxième(s) électrodes sont imprimées de part et d'autre d'une couche d'un matériau intrinsèquement piézo-résistif, notamment un matériau compressible. Dans ce cas, une pression exercée en un point de mesure entraîne une compression locale du matériau, et une diminution de l'impédance entre les électrodes. Dans une autre variante, les première(s) et deuxième(s) électrodes sont imprimées sur une même face d'un substrat, en regard d'une couche faiblement conductrice, par exemple d'un polymère comportant des charges conductrices, notamment des charges carbonées. Dans ce cas, lors d'une pression exercée en un point de mesure, la couche faiblement conductrice vient au contact des électrodes concernées, permettant un contact électrique dont la résistance dépend de la pression exercée.

Les électrodes des structures de détection peuvent être réalisées sur au moins un substrat représentant la cavité mise à plat. Par exemple, pour une cavité de forme cubique, les électrodes peuvent être réalisées sur au moins un substrat en forme de croix, qui est plié lors de sa mise en place dans un support creux pour former la cavité. Les branches de la croix peuvent être pliées à angle droit par rapport au carré central de la croix, de façon à s'étendre selon les montants de la cavité, tandis que le carré central en définit le fond. Sur au moins deux branches opposées, les électrodes peuvent présenter chacune une forme de U, la portion des électrodes correspondant au fond du U correspondant par exemple aux électrodes de lignes, et croisant perpendiculairement les électrodes de colonnes. Les portions correspondant aux branches du U s'étendent de préférence jusqu'à l'extrémité libre de la branche de la croix, ce qui en facilite le raccordement électrique à un circuit de lecture.

Circuit de traitement

Le capteur peut être relié à tout circuit de traitement adapté, relié aux structures de détection, et capable de délivrer une information renseignant sur au moins une composante de la force appliquée sur la surface de détection.

Ce circuit de traitement peut comporter un microcontrôleur ou tout autre circuit électronique capable de délivrer ladite information. Il peut s'agir d'un circuit qui est intégré dans un boîtier avec la cavité ou d'un circuit qui est indépendant du support portant la cavité.

Le capteur peut ainsi comporter un circuit de traitement de signaux délivrés par les structures de détection, représentatifs des pressions induites sur ces structures par la force s'appliquant sur la surface de détection, et configuré pour les traiter afin de calculer au moins une composante de ladite force.

De préférence, le circuit de traitement est configuré pour mesurer une distribution des pressions sur au moins l'une des structures de détection. Le circuit de traitement peut notamment être configuré pour mesurer au moins une composante du moment de la force s'exerçant sur la surface de détection à partir de distributions de pression détectées par des structures de détection sur des surfaces opposées de la cavité.

Dans un exemple de mise en oeuvre, le capteur comporte une pluralité de cellules de détection unitaires, formées chacune d'une cavité unitaire équipée uniquement de structures de détection mono-point. Les cavités des cellules de détection unitaires peuvent être intégrées sur un même support de façon à former une matrice de cavités, le support formant par exemple un bloc monolithique, ou pouvant être obtenu par assemblage d'éléments distincts. Le milieu déformable peut former un bloc monolithique continu s'étendant dans chacune des cavités unitaires et définissant une surface de détection commune à l'ensemble des cavités et sur laquelle une force à détecter est susceptible de s'exercer.

Le circuit de traitement peut alors être configuré pour mesurer au moins une composante d'une force unitaire susceptible de s'exercer sur une cellule unitaire à partir des pressions détectées par les structures de détection mono-point de cette cellule, et de préférence, le circuit de traitement est configuré pour mesurer la distribution d'au moins une composante d'au moins une force susceptible de s'exercer sur la surface de détection du capteur à partir de la connaissance des forces unitaires s'appliquant sur les cellules de détection.

Le circuit de traitement peut être configuré pour détecter deux forces distinctes susceptibles de s'exercer sur le capteur. Par « forces distinctes », on entend deux forces s'appliquant à des points d'application distincts sur la surface de détection du capteur, ces forces pouvant être de direction et/ou de norme identiques, ou non.

Le circuit de traitement peut comporter un circuit de lecture par adressage de lignes et de colonnes. Le circuit de lecture peut être agencé pour soumettre une électrode de ligne sélectionnée et une électrode de colonne sélectionnée à une différence de potentiel prédéfinie, et à mesurer un courant résultant, ou à soumettre les électrodes sélectionnées à un courant prédéfini et à mesurer une tension. Le circuit de lecture peut comporter un convertisseur analogique numérique. Le circuit de lecture peut être agencé pour relier électriquement à un même potentiel, par exemple la masse, toutes les électrodes non sélectionnées pour la mesure à un instant donné, afin de réduire le risque d'accumulation de charges parasites.

Le circuit de lecture et le circuit de traitement peuvent être des composants distincts ou un même composant, par exemple un microcontrôleur.

Procédé de mesure

L'invention a encore pour objet un procédé pour mesurer au moins une composante d'une force exercée sur la surface de détection d'un capteur selon la revendication 14, comportant les étapes consistant à :

    o Mesurer les perturbations électriques induites par des contraintes s'exerçant sur la ou les zones de mesure des structures de détection du capteur du fait de la transmission jusqu'à elles des efforts du milieu élastiquement déformable définissant la surface de détection, et
    o calculer à partir des perturbations ainsi mesurées au moins une composante de la force exercée sur le capteur.

Au moins l'une des structures de détection peut être multipoint, auquel cas on peut mesurer une distribution de pression sur ladite structure de détection multipoint. On peut notamment calculer au moins une composante du moment de la force exercée à partir de la mesure des champs de pression sur des structures de détection présentes sur des surfaces opposées de la cavité.

On peut déterminer, durant une phase de calibration, les propriétés de transmission d'efforts du milieu élastiquement déformable en soumettant le capteur à des sollicitations mécaniques connues.

La force appliquée sur la surface de détection peut être déterminée en fonction des signaux détectés par les structures de détection grâce à un réseau de neurones entraîné, notamment pour un capteur comportant une surface de détection de forme relativement complexe.

Le réseau de neurones peut être entraîné durant une phase de calibration, durant laquelle on soumet le capteur à des sollicitations mécaniques connues. Des techniques autres que reposant sur l'emploi de réseaux de neurones, par exemple des algorithmes de régression, peuvent être utilisées (par exemple SVR, « GradientBoosting », « Random Forest », ...).

Lorsque les structures de détection présentent une disposition matricielle des électrodes, avec des électrodes de lignes et des électrodes de colonnes, par exemple sous forme de M lignes et de N colonnes, le croisement des électrodes définissant des points de mesure, le procédé peut comporter les étapes suivantes :

    o On met l'ensemble des électrodes à la masse, et
    o On répète, pour i entier compris en 1 et N :

        - on alimente l'électrode i, et

- on répète, pour j entier compris entre 1 et M :

  o on connecte l'électrode j à l'entrée d'un circuit de lecture,
  o on lit le signal sur le point de mesure correspondant à l'intersection des électrodes i et j, et,
  o on met à la masse l'électrode j.

- On met à la masse l'électrode i.

La connexion successive des électrodes au circuit de lecture peut se faire en multiplexant les canaux d'un unique convertisseur analogique/numérique, ce qui permettre de réduire le coût de fabrication du dispositif. En variante, on peut utiliser plusieurs convertisseurs analogique/numérique qui sont lus séparément. Il peut par exemple y avoir un convertisseur pour chaque électrode j, ou deux convertisseurs possédant chacun M/2 canaux, si cela est souhaité.

Procédé de fabrication

L'invention a encore pour objet, selon un autre de ses aspects, un procédé de fabrication d'un capteur de force selon la revendication 16, dans lequel :

o On imprime sur une première couche de matériau faiblement conducteur électrique au moins une première électrode ayant une forme linéaire,
o on imprime sur une deuxième couche de matériau faiblement conducteur électrique au moins une deuxième électrode ayant une forme linéaire,
o on assemble les première et deuxième couches de façon à ce que les électrodes soient disposées sur les faces extérieures de l'ensemble et que la deuxième électrode croise, en vue de face, la première électrode.

Le procédé peut notamment comporter l'étape consistant à imprimer une pluralité de premières électrodes comportant des portions parallèles espacées sur la première couche de matériau faiblement conducteur, et une pluralité de deuxièmes électrodes sur la deuxième couche de matériau faiblement conducteur. Par « faiblement conducteur », on désigne un matériau dont la résistivité de volume est supérieure ou égale à 1000 Ohm.cm et de préférence inférieure ou égale à 50000 Ohm.cm, mieux à 30000 Ohm.cm, et dont la résistivité de surface est supérieure ou égale à 5000 Ohm/carré et de préférence inférieure ou égale à 50000 Ohm/carré, mieux à 25 000 Ohm/carré Il peut par exemple s'agir d'une feuille polymère carbonée telle que le Velostat®.

De préférence, le procédé comporte une étape consistant à découper chaque couche pour lui donner une forme correspondant au patron de la cavité, par exemple une forme de croix pour une cavité cubique ou parallélépipédique. Dans ce cas, on peut imprimer les électrodes avec une forme de U comme expliqué plus haut.

On peut notamment découper les couches alors qu'elles sont empilées.

Le procédé peut comporter l'étape consistant à intégrer l'ensemble ainsi découpé à un support en creux, l'ensemble définissant alors les faces d'une cavité. On peut alors remplir au moins partiellement la cavité avec un matériau élastiquement déformable, notamment un élastomère. Ensuite, on peut connecter électriquement chaque électrode du capteur ainsi obtenu à un circuit de lecture d'un circuit de traitement.

**Brève description des dessins**

L'invention pourra être mieux comprise à la lecture de la description détaillée qui va suivre, d'exemples de mise en oeuvre non limitatifs de celle-ci, et à l'examen du dessin annexé, sur lequel :

[Fig 1] représente en coupe transversale, partielle et schématique, un exemple de capteur de force selon l'invention,
[Fig 2a] illustre en coupe transversale, partielle et schématique, un exemple de capteur avec le milieu déformable venant à affleurement de l'ouverture de la cavité,
[Fig 2b] illustre en coupe transversale, partielle et schématique, un exemple de capteur avec le milieu déformable s'étendant hors de la cavité et définissant une surface de détection plane,
[Fig 2c] illustre en coupe transversale, partielle et schématique, un exemple de capteur avec le milieu déformable s'étendant hors de la cavité et définissant une surface de détection en forme de dôme,
[Fig 3a] représente de manière partielle et schématique en coupe transversale un exemple de structure de détection comportant des électrodes portées par deux couches de matériau faiblement conducteur,
[Fig 3b] représente de manière partielle et schématique en coupe transversale à un autre exemple de structure de détection comportant des électrodes situées de part et d'autre d'une même couche de matériau piézo-résistif,
[Fig 3c] représente de manière partielle et schématique en coupe transversale un autre exemple de structure de détection comportant des électrodes portées par deux couches souples et une couche de polymère conducteur,

[Fig 3d] représente de manière partielle et schématique en coupe transversale un autre exemple de structure de détection comportant des électrodes sur la même face d'une couche souple et une couche de polymère conducteur,

[Fig 3e] représente de manière partielle et schématique en coupe transversale un autre exemple de structure sensible comportant des jauges de contraintes faisant saillie dans le milieu déformable,

[Fig 3f] représente de manière partielle et schématique en coupe transversale un autre exemple de structure sensible comportant des jauges de contraintes partiellement intégrées au support et venant au contact du milieu déformable,

[Fig 4] est en vue de face d'un capteur comportant des structures de détection multipoint définissant de multiples zones de mesure,

[Fig 5] illustre en coupe transversale schématique et partielle selon V de la figure 4 les zones de mesures présentes sur les faces latérales du capteur,

[Fig 6] est une vue en perspective, partielle et schématique, représentant un exemple d'intégration de différents éléments constitutifs du capteur,

[Fig 7] est une vue de face, partielle et schématique, d'un exemple de deux couches destinées à être empilées et intégrées à la cavité pour former des structures de détection multipoints,

[Fig 8] est en vue partielle et schématique, de dessus, d'une cellule de détection unitaire comportant des structures de détection mono-point,

[Fig 9] est en vue de dessus, partielle et schématique, d'un exemple de capteur à cellules de détection unitaires,

[Fig 10] est une coupe transversale, schématique et partielle, selon X de la figure 9 du capteur de cette figure,

[Fig 11] est une vue de dessus, partielle et schématique, d'un exemple de deux couches destinées à être empilées et intégrées à une cavité unitaire pour former des structures de détection mono-point,

[Fig 12] représente, de manière schématique et partielle, un exemple de capteur selon l'invention comportant un circuit de traitement,

[Fig 13] est un schéma en blocs illustrant un exemple de fonctionnement d'un capteur de force selon l'invention,

[Fig 14] représente schématiquement une zone unitaire de mesure de la structure de détection sur lequel la pression peut être détectée,

[Fig 15] est en vue en perspective, partielle et schématique, d'un exemple de capteur selon l'invention illustrant les efforts transmis aux structures de détection lorsqu'une force normale est exercée sur sa surface de détection,

[Fig 16a] est un graphe illustrant les propriétés d'élasticité d'un exemple de milieu déformable,

[Fig 16b] est un graphe illustrant les propriétés d'élasticité d'un autre exemple de milieu déformable,

[Fig 17] est en vue en perspective, partielle et schématique, d'un exemple de capteur selon l'invention, illustrant les efforts transmis aux structures de détection lorsqu'une force quelconque est exercée sur la surface de détection,

[Fig 18a] est en vue en perspective, partielle et schématique, d'un exemple de capteur illustrant les efforts transmis aux structures de détection lorsqu'une force normale de moment positif est exercée sur la surface de détection,

[Fig 18b] est en vue en perspective, partielle et schématique, d'un exemple de capteur illustrant les efforts transmis aux structures de détection lorsqu'une force normale de moment négatif est exercée sur la surface de détection,

[Fig 19] est un schéma en blocs illustrant certains détails d'un procédé de calibration d'un capteur selon l'invention,

[Fig 20] est un schéma en blocs illustrant un exemple de fonctionnement d'un capteur comportant une matrice de cellules de détection unitaires,

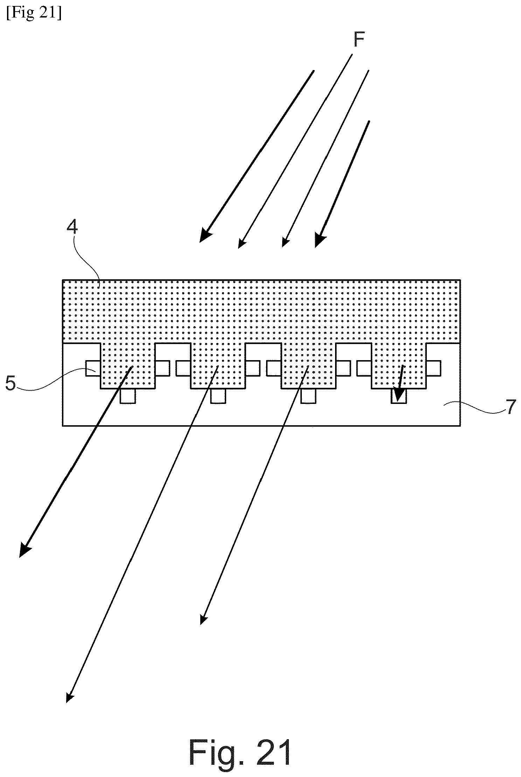

[Fig 21] est une coupe transversale, schématique et partielle, selon X de la figure 9, de la matrice de cellules de détection unitaires, illustrant la possibilité de mesurer la distribution d'une force exercée sur la surface de détection,

[Fig 22] est une coupe transversale, schématique et partielle, selon X de la figure 9 de la matrice de cellules de détection unitaires, illustrant la possibilité de détecter deux forces distinctes sur la surface de détection,

[Fig 23] est une coupe transversale, schématique et partielle, selon X de la figure 9 de la matrice de cellules de détection unitaires illustrant la possibilité de mesurer le moment d'une force exercée sur la surface de détection,

[Fig 24] est un schéma en blocs illustrant un exemple de procédé de lecture des points de mesure d'une structure de détection multipoint,

[Fig 25] représente de manière schématique et partielle un exemple de la résistance électrique entre les électrodes selon le procédé de la figure 24, et,

[Fig 26] est un schéma en blocs illustrant un exemple de procédé de fabrication d'un capteur selon l'invention,

## Description détaillée

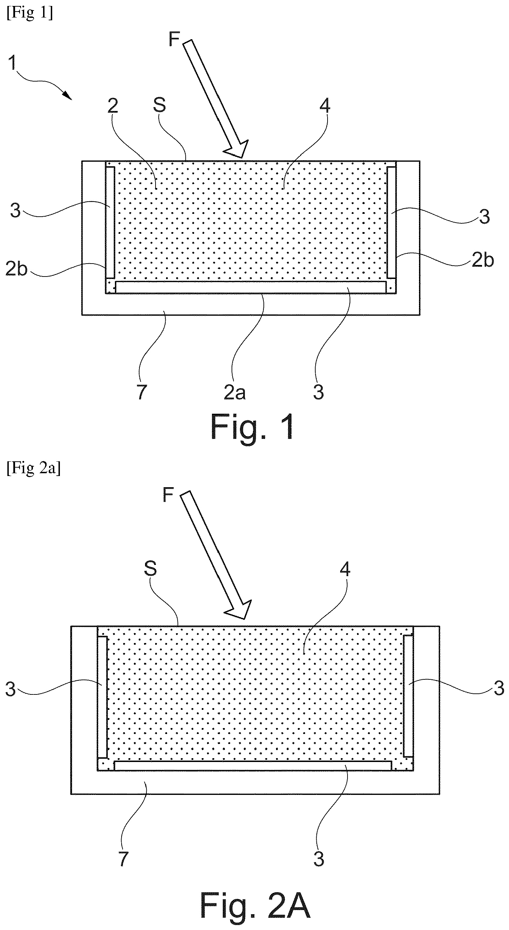

On a illustré à la figure 1 un exemple de capteur de force 1 selon l'invention. Le capteur 1 comporte une cavité 2 ayant une forme de pavé, définissant une surface de fond rectangulaire 2a et quatre surfaces rectangulaires 2b orientées perpendiculairement à la surface 2a, formant les faces latérales de la cavité. La cavité 2 est intégrée dans un support 7 creux, réalisé par exemple dans un matériau électriquement isolant et de préférence rigide, par exemple un plastique rigide, une céramique ou du verre. En variante, le support 7 peut être réalisé dans un matériau métallique, étant isolé électriquement des structures de détection à son contact, le cas échéant.

Une structure de détection 3 se situe sur chacune des surfaces 2a et 2b.

La cavité 2 est remplie par un milieu déformable 4, définissant une surface de détection S sur laquelle une force extérieure F vient s'appliquer.

Les efforts engendrés par l'application de la force F sont transmis par le milieu déformable 4 sur les structures de détection 3, lesquelles peuvent détecter une pression s'appliquant sur leur surface respective, avec une orientation normale à cette surface, et correspondant aux efforts transmis.

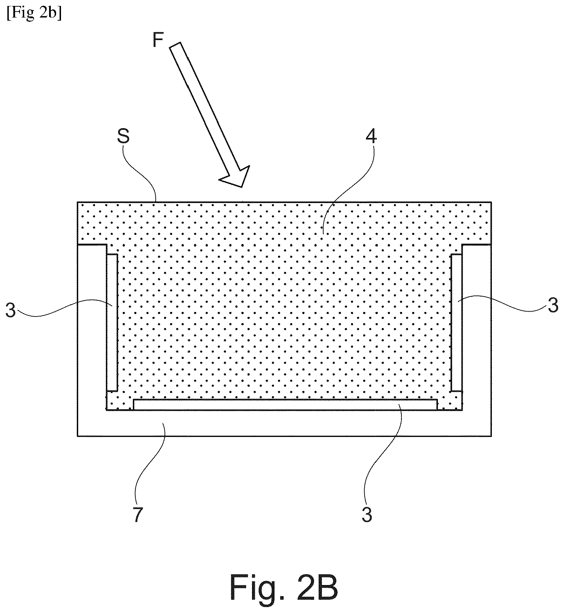

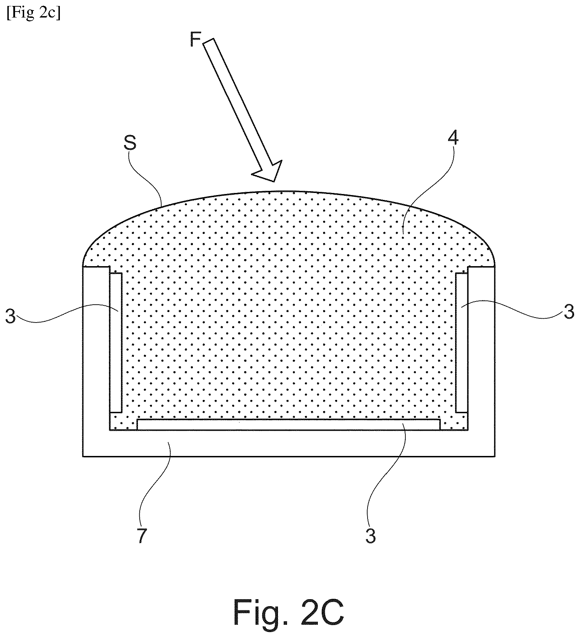

Le milieu déformable 4 peut remplir la cavité 2 de différentes façons, et la surface de détection peut prendre différentes formes. Par exemple, comme illustré à la figure 2a, le milieu déformable 4 remplit la cavité 2 de manière à venir à affleurement avec l'ouverture de celle-ci. Dans une variante, le milieu déformable 4 fait saillie hors de la cavité 2, comme illustré à la figure 2b. Dans les exemples des figures 2a et 2b, la surface de détection S est une surface plane, parallèle à la surface de fond 2a de la cavité. Dans une autre variante, illustrée à la figure 2c, le milieu déformable 4 recouvre l'ouverture de la cavité 2 avec une épaisseur variable, le recouvrement étant plus épais au centre de la cavité 2, la surface de détection S formant un dôme au-dessus de la cavité 2.

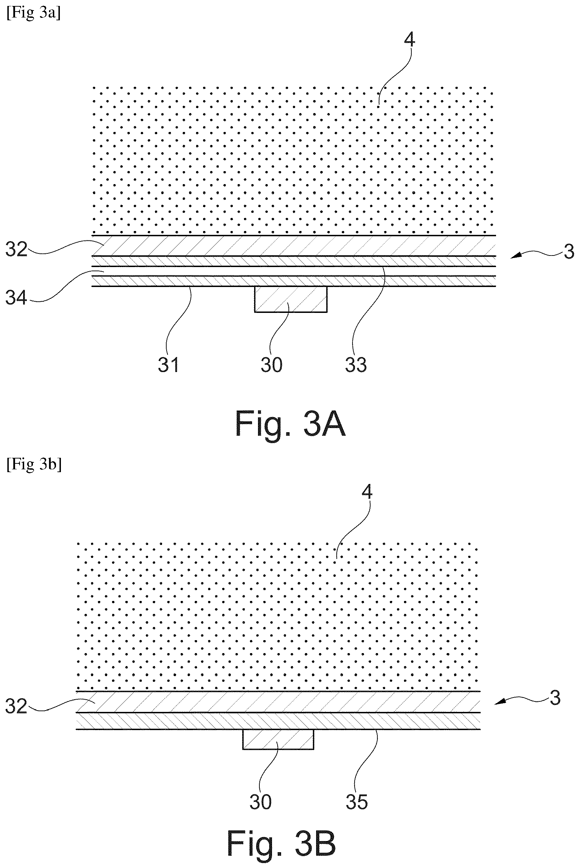

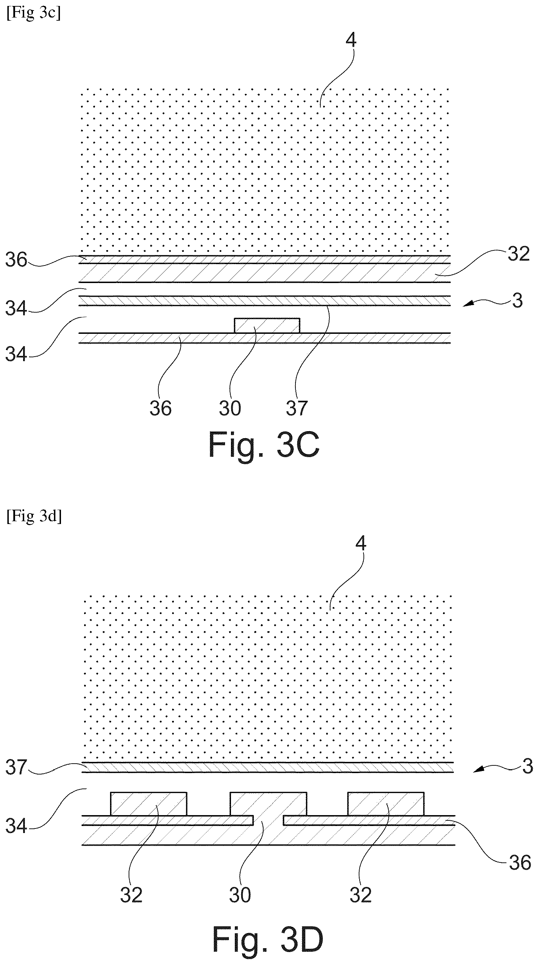

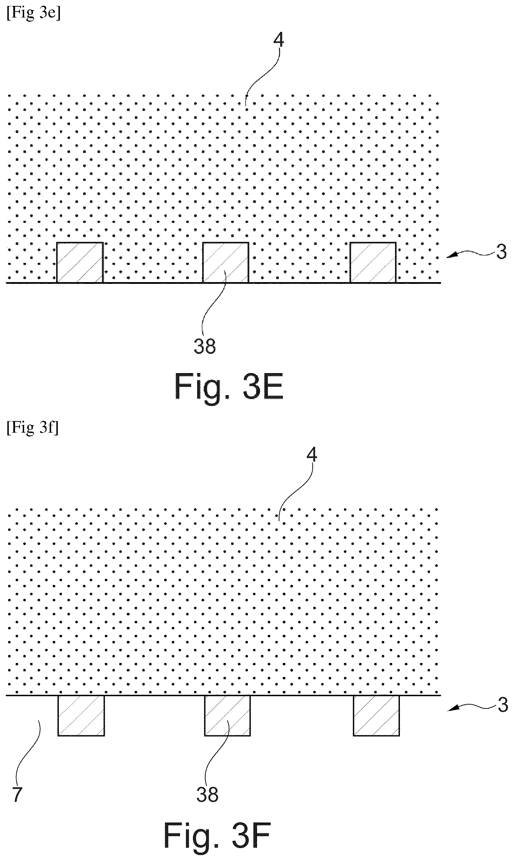

La structure de détection 3 peut être réalisée de différentes manières, dont certaines sont représentées aux figures 3a, 3b, 3c, 3c, 3e et 3f.

Comme illustré à la figure 3a, une première électrode 30 peut être imprimée sur une couche de matériau faiblement conducteur 31, par exemple un polymère chargé en particules de carbone, et une deuxième électrode 32 peut être imprimée sur une autre couche de matériau faiblement conducteur 33. Les couches 31 et 33 sont ensuite superposées de manière à ce que les électrodes 30 et 32 soient disposées à l'extérieur de l'ensemble. Les deux couches 31 et 33 sont par exemple séparées par une très fine lame d'air 34, et ne se touchent avec un contact électrique satisfaisant que lorsqu'une pression est exercée sur l'ensemble. Dans l'exemple considéré, les électrodes 30 et 32 ont chacune une forme linéaire et sont agencées perpendiculairement l'une par rapport à l'autre. L'électrode 32 est en contact avec le milieu déformable 4, tandis que l'électrode 30 est en contact avec un support sous-jacent (non représenté ici). Les efforts transmis par le milieu déformable 4 lorsqu'une force F s'applique sur la surface de détection S font varier la surface de contact entre les couches 31 et 33. Lorsqu'une tension est appliquée entre les électrodes 30 et 32, la variation de la pression de contact entre les couches 31 et 32 induit un changement de la résistance électrique mesurée dans les zones où les électrodes s'intersectent (qui correspondent aux points de mesure).

Dans une variante illustrée à la figure 3b, les électrodes 30 et 32 sont imprimées de part et d'autre d'une même couche de matériau intrinsèquement piézo-résistif 35, qui se déforme sous l'action des efforts transmis par le milieu déformable 4, provoquant similairement à l'exemple précédent une variation de la résistivité électrique dans les zones d'intersection des électrodes.

Dans d'autres variantes, les électrodes sont portées par un substrat souple, par exemple en PET. Les électrodes 30 et 32 sont par exemple imprimées ou déposées chacune sur une couche souple 36 électriquement isolante et se font face, comme illustré à la figure 3c. Une couche faiblement conductrice 37, par exemple d'un polymère, éventuellement alvéolaire, ou bien d'un matériau piézoélectrique, est disposée en sandwich entre les électrodes 30 et 32 et séparée de chaque électrode 30 ou 32 par une fine lame d'air 34.

Dans la variante de la figure 3d, les électrodes 30 et 32 sont portées par un même substrat 36 électriquement isolant, en regard d'une couche faiblement conductrice 37, par exemple une mousse ou un matériau non alvéolaire, en contact avec le milieu déformable 4. Les électrodes sont séparées de la couche 37 par une fine lame d'air 34. Lors d'un effort transmis par le milieu déformable 4, la couche 37 peut venir au contact d'une partie des électrodes.

Comme expliqué précédemment, la mesure de la variation de la résistance électrique entre deux électrodes de telles structures de détection 3 permet d'estimer les efforts transmis par le milieu déformable.

La pression engendrée par les efforts transmis sur les structures de détection 3 peut être mesurée le cas échéant avec des capteurs discrets.

Dans l'exemple illustré à la figure 3e, la structure de détection 3 comporte des jauges de contrainte 36, par exemple de type métallique, disposées sur la surface de la cavité et s'étendant au sein du milieu déformable 4.

Dans la variante illustrée à la figure 3f, les jauges de contrainte 36 sont au moins partiellement intégrées au support 7 et viennent partiellement en contact avec le milieu déformable 4. D'autres types de capteurs de contrainte peuvent encore être utilisés, par exemple des capteurs de pression de type Micro Electro-Mechanical System (MEMS).

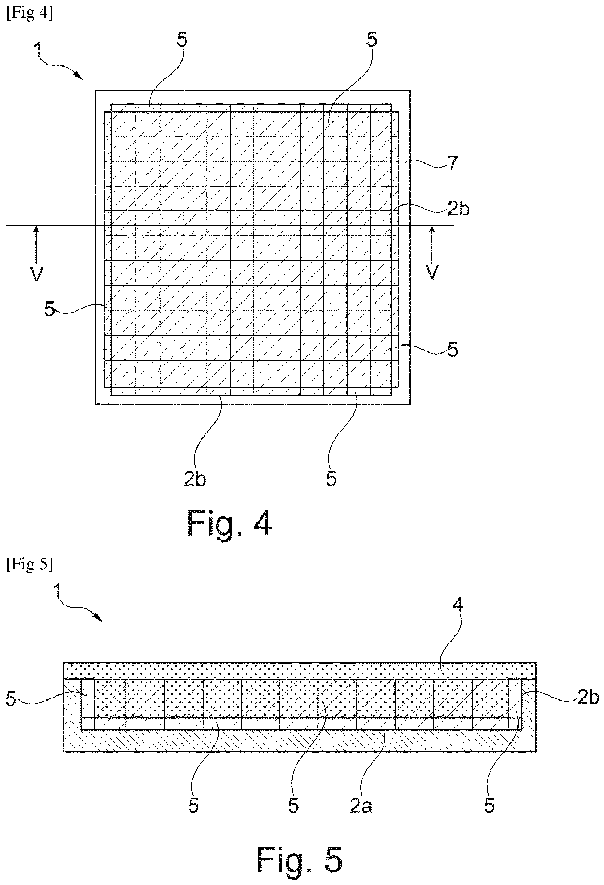

Les structures de détection 3 peuvent être multipoint ou mono-point de mesure. On a illustré à la figure 4 les zones de mesure 5 obtenues sur les surfaces de la cavité d'un capteur comportant des structures de détection multipoint. Dans l'exemple considéré, la structure de détection 3 disposée sur la surface de fond 2a de la cavité 2 définit une grille de 12x12 zones de mesure 5. Sur les surfaces latérales 2b et comme illustré à la figure 5, la structure de détection 3 définit un rang de zones de mesure 5. Le nombre et la répartition des zones de mesure 5 sur les structures de détection 3 n'est bien entendu pas limité à l'exemple illustré ; tout agencement est envisageable, selon la nature et la disposition des moyens de détection dont est munie la structure de détection.

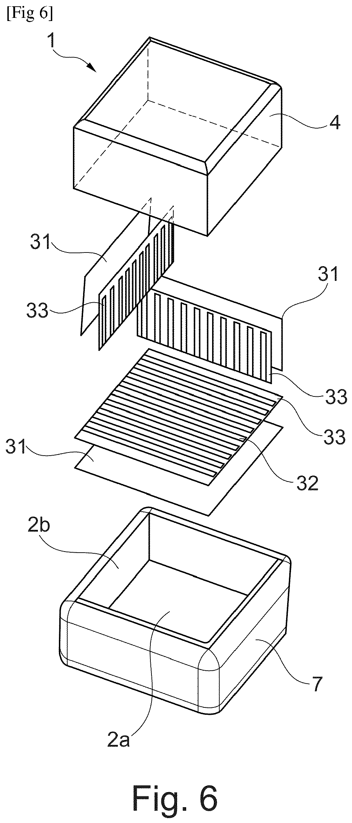

Pour obtenir la grille de zones de mesure qui vient d'être décrite, on peut intégrer sur les surfaces 2a et 2b de la cavité 2 des structures de détection 3 telles que celles représentées à la figure 6. Dans cet exemple, chaque structure de détection 3 comporte comme décrit précédemment deux couches 31 et 33 de matériau faiblement conducteur électrique, sur lesquelles on a par exemple imprimé ou déposé par sérigraphie une pluralité d'électrodes linéaires et parallèles entre elles, espacées régulièrement. Sur la figure 6, uniquement les électrodes 32 des couches 33 sont visibles. Des électrodes 30 sont disposées sur la face non visible des couches 31 et agencées par exemple perpendiculairement à celles de la couche 33. Les couches 31 et 33 ainsi disposées sont intégrées dans la cavité 2 du support 7. On rajoute par la suite le milieu déformable 4 qui vient au contact des couches 33. Les électrodes imprimées sur la couche 33 des surfaces latérales 2b de la cavité sont verticales dans l'exemple de réalisation illustré, mais toute autre orientation est envisageable, par exemple horizontale ou oblique, les électrodes pouvant avoir une forme de U ou V, par exemple.

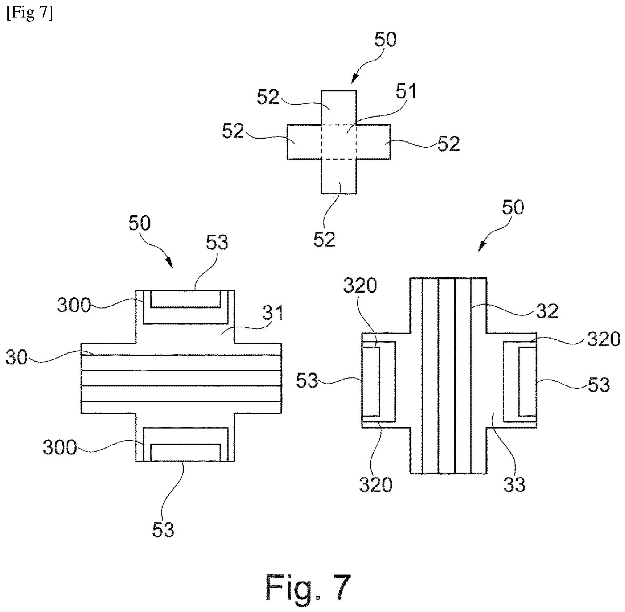

On a illustré à la figure 7 une autre manière de réaliser des structures de détection multipoint au sein d'une cavité ayant la forme d'un pavé. Dans cet exemple, des électrodes 30 et 32 de forme linéaire sont disposées sur des couches de matériau faiblement conducteur 31 et 33, respectivement, qui seront ensuite assemblées l'une sur l'autre de manière à ce que les électrodes 30 et 32 soient situées sur l'extérieur de l'ensemble.

La forme de croix 50 à quatre branches des couches 31 et 33 représente la cavité cubique mise à plat. Toutes les électrodes sont imprimées dans un même plan, puis l'ensemble est plié à angle droit par rapport au carré central 51 de la croix pour sa mise en place dans le support creux 7. Ainsi, les structures de détection 3 de toutes les surfaces de la cavité 2 sont intégrées dans le support d'un seul bloc, le carré central 51 de la croix formant la structure de détection de la surface de fond 2a et les branches 52 de la croix formant chacune la structure de détection 3 d'une surface latérale 2b de la cavité. La disposition des électrodes est telle que sur chaque structure de détection, les électrodes 30 intersectent perpendiculairement les électrodes 32, chaque intersection correspondant à une zone de mesure 5. Toutes les électrodes 30 et 32 émergent sur la partie supérieure de la cavité. Sur deux branches 52 opposées de chaque couche, les électrodes ont une forme de U, avec des branches 300 ou 320 qui s'étendent jusqu'au bord libre 53 de la branche afin de faciliter le raccordement électrique à un circuit de lecture.

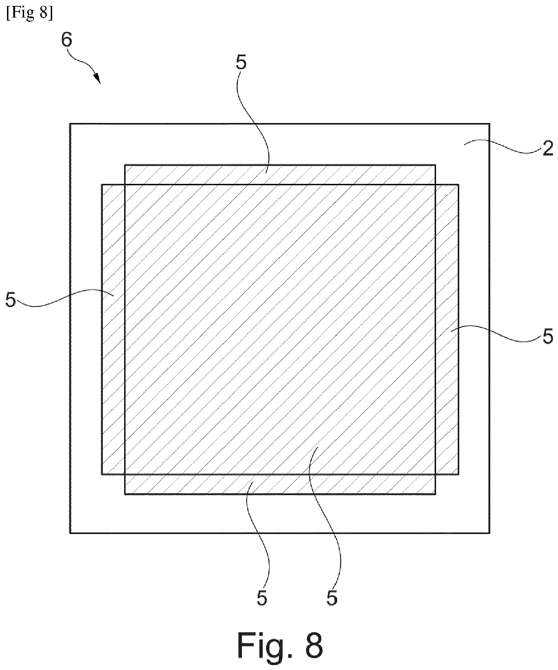

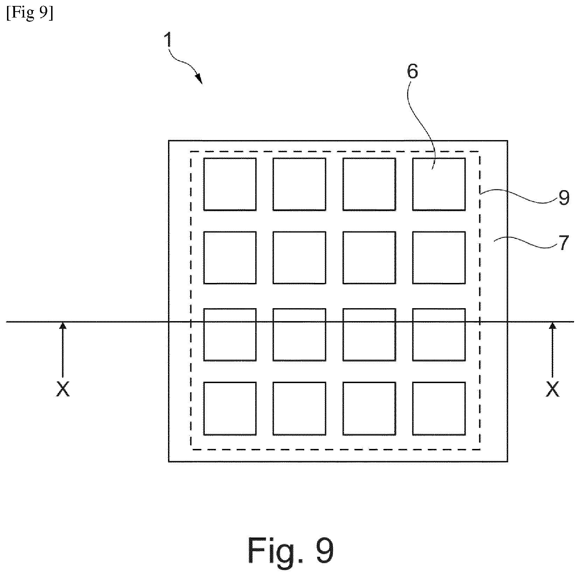

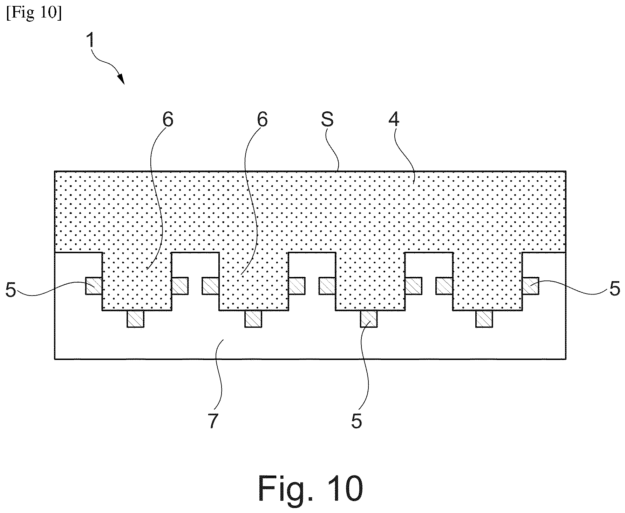

Dans un autre mode de réalisation, le capteur 1 comporte une pluralité de cellules de détection unitaires 6 comportant uniquement des structures de détection 3 mono-point de mesure. Une cellule de détection unitaire 6 comporte par exemple une cavité unitaire 2 cubique, comme illustré à figure 8, et présente cinq zones de mesure 5 distinctes, soit une par structure de détection 3. On peut alors former une matrice 9 de cellules de détection unitaires 6 comme illustré à la figure 9 en intégrant les cavités sur un même support 7 par exemple sur un même plan. Le support est de préférence rigide, et peut être formé d'un bloc monolithique, comme dans l'exemple considéré, ou en variante obtenu par assemblage d'éléments distincts. Le milieu déformable 4 du capteur 1 ainsi obtenu forme de préférence un bloc monolithique tel que représenté à la figure 10, définissant une surface de détection S commune à l'ensemble des cellules de détection unitaires 6 assemblées. L'avantage d'un tel capteur est de pouvoir mesurer une distribution continue des efforts exercés sur la surface de détection S. En particulier, et contrairement à un capteur à cavité unique, il est possible avec une matrice 9 de cellules de détection unitaires de distinguer l'application de deux forces distinctes simultanées.

Une cellule de détection unitaire 6 peut être réalisée par intégration dans la cavité 2 de deux couches 31 et 33 de matériau faiblement conducteur en forme de croix 50, similairement à ce qui a été décrit précédemment. Dans l'exemple considéré, pour obtenir des structures de détection 3 mono-point, on imprime par exemple trois électrodes 30 sur la couche 31, et trois électrodes 32 sur la couche 33. La disposition des électrodes est telle qu'une fois l'ensemble des deux couches assemblées dans la cavité, une électrode 30 intersecte perpendiculairement une électrode 32 sur chaque structure de détection unitaire 3, correspondant à l'unique zone de mesure 5. Comme précédemment décrit, toutes les électrodes 30 et 32 émergent sur la partie supérieure de la cavité, et les électrodes situées sur deux branches opposées 52 de la croix ont une forme de U, avec des branches 300 ou 320 qui s'étendent jusqu'au bord libre 53 de la branche

En variante, les structures de détection d'une ligne de cellules de détection unitaires 6 d'une matrice 9 peuvent être formée en « bandelette » sur un même substrat, notamment sur un substrat plan. La bandelette est par la suite pliée pour être intégrée au support 7 suivant une forme crénelée épousant la succession de cavités.

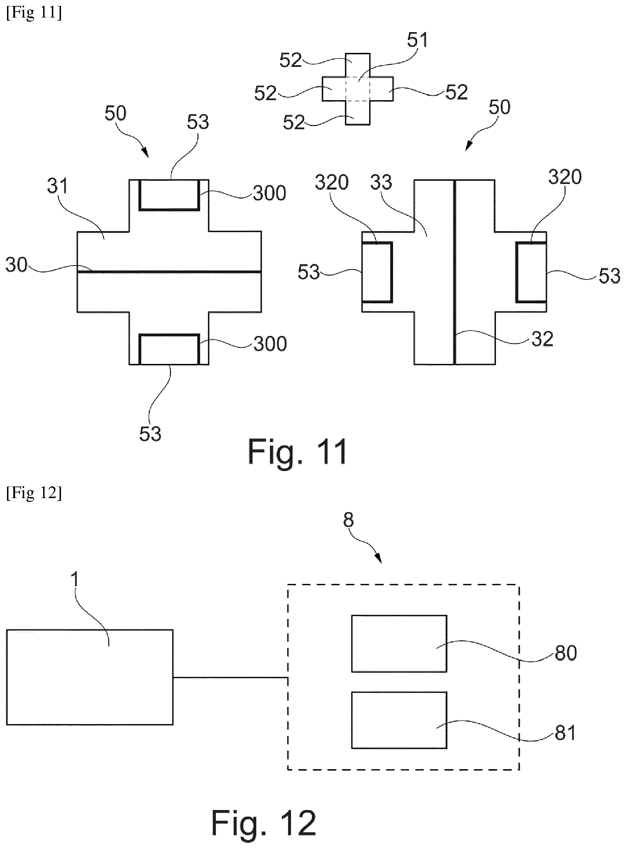

Le capteur de force selon l'invention comporte de préférence et comme illustré à la figure 12 un circuit de traitement 8 afin de traiter les signaux délivrés par les structures de détection 3 pour mesurer au moins une, et de préférence toutes les composantes d'une force exercée sur la surface de détection S. Il comporte par exemple une unité centrale 80 et une mémoire 81.

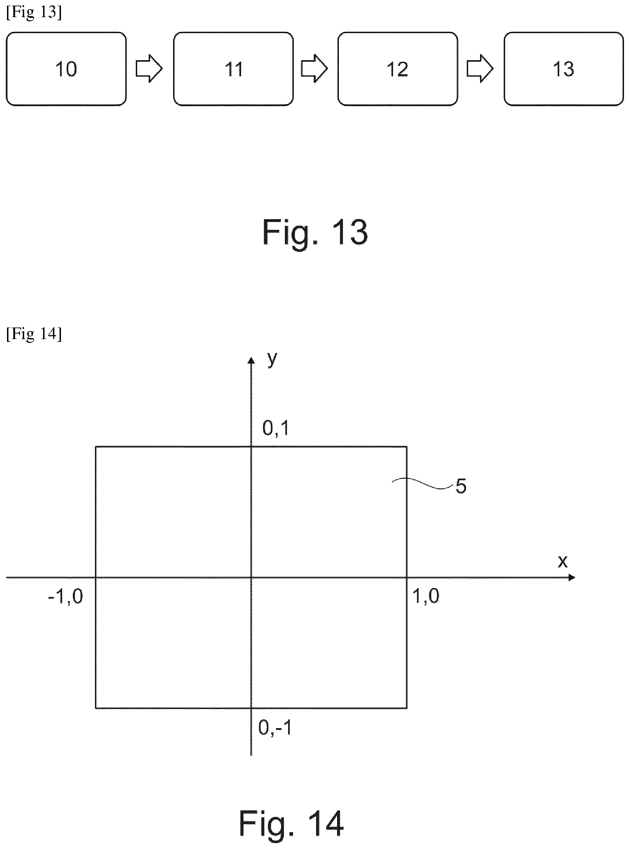

Les composantes de la force exercée sur la surface de détection S peuvent être déterminées à partir des signaux traités en suivant par exemple les étapes du procédé représenté à la figure 13 et décrit ci-après. A titre d'exemple, on considère un capteur comportant une cavité ayant la forme d'un pavé tel qu'illustré à la figure 6, et comportant sur chacune des surfaces de sa cavité une structure de détection 3 multipoint définissant une grille de zones de mesure similaire à celle représentée sur la figure 4. Dans l'exemple considéré, les zones de mesure 5 sont de forme carrée et toutes de surface identique, comme illustré à la figure 12.

A la première étape 10, on mesure séquentiellement la tension sur chaque zone de mesure 5 de chaque structure de détection 3. Pour une structure de détection, on note $v_{ij}$ la tension mesurée dans la zone de mesure (i,j) se situant à l'intersection de la ligne i avec la colonne j de la grille, i et j étant des entiers variant de 1 au nombre de lignes et de colonnes de la grille, respectivement. A l'étape 11, la pression unitaire $p_{ij}$ exercée sur la zone de mesure (i,j) est estimée en fonction de la tension mesurée, en utilisant par exemple la relation suivante,

$$p_{ij} = \kappa v_{ij}$$

avec $\kappa$ un facteur de conversion exprimé en Newton / (mm$^2$.volts) qui dépend des matériaux utilisés. On obtient alors avantageusement une distribution des pressions sur la structure de détection concernée, dont la résolution peut par exemple aller sous le millimètre.

La résultante des efforts normaux $F_N$ exercés sur la structure de détection 3 peut être obtenue en sommant les pressions correspondantes :

$$F_N = \sum \sum p_{ij}\, ds = \sum \sum \alpha v_{ij}\, ds$$

avec $ds$ désignant la surface de la zone de mesure 5 comme représenté à la figure 14 dans un repère normalisé, $ds$ étant identique pour toutes les zones de mesure.

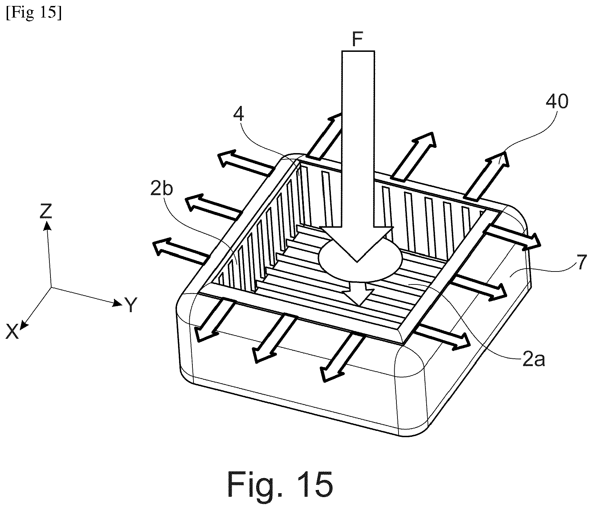

A l'étape 12, on calcule par exemple les trois composantes de la force F exercée sur la surface de détection S du capteur 1. Au vu de la géométrie du capteur de l'exemple considéré, on se place pour la description qui suit dans un repère cartésien aux directions (X, Y, Z), Z désignant ici une direction normale à la surface de détection S et à la surface du fond de la cavité, et X et Y désignant les directions tangentielles, comme illustré à la figure 15. La composante normale $F_z$ de la force F, c'est-à-dire la force selon la direction Z, est simplement donnée par la résultante des efforts normaux $F_N$ exercée sur la structure de détection du fond de la cavité 2a.

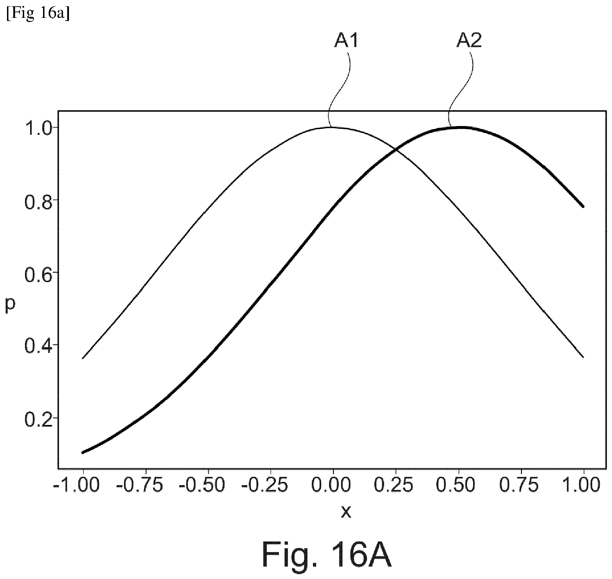

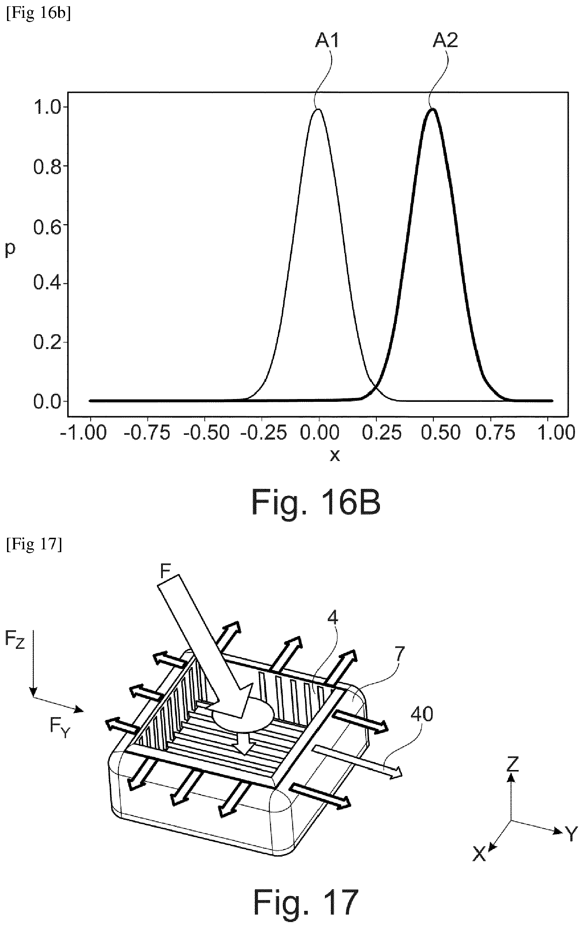

Selon la nature du milieu déformable 4, une force exercée sur le capteur selon une direction normale, c'est-à-dire dans l'exemple considéré selon la direction Z, peut conduire à des efforts transmis 40 dans toutes les directions, et notamment induit des mesures de pression non nulles sur les structures de détection latérales. Ce phénomène, illustré à la figure 15, nécessite d'être pris en compte pour le calcul des composantes tangentielles $F_x$ et $F_y$ de la force F. Il est possible d'estimer et par la suite de compenser ces mesures de pression tangentielle en modélisant la réponse du milieu déformable 4 à un effort normal, par exemple selon un modèle de type gaussien. Des exemples de telles modélisations sont illustrés aux figures 16a et 16b. On se place à titre d'exemple selon la direction X, mais le raisonnement est similaire pour la direction Y au vu de la symétrie du problème. On soumet dans l'exemple considéré le milieu déformable 4 à deux forces normales exercés à des positions A1 et A2 distinctes, correspondant au maximum des courbes représentées aux figures 16a et 16b. L'effort tangentiel $F_t$ transmis par la force normale au point x dépend de la force normale $F_N$ exercée suivant par exemple la relation ci-dessous :

$$F_t(x, F_N, B_x) = \alpha F_N e^{\frac{-(x - B_x)}{2\sigma^2}}$$

$B_x$ désignant la composante x du barycentre des efforts normaux sur la surface et $\alpha$ et $\sigma$ étant deux paramètres qui dépendent des propriétés du milieu déformable 4 et des dimensions du capteur Une valeur de $\sigma$ relativement basse, telle qu'illustrée à la figure 16b, implique que la transmission de l'effort normal dans les directions tangentielles est limitée. A l'inverse, une valeur de $\sigma$ relativement haute telle qu'à la figure 16a implique que la transmission de l'effort normal dans les directions tangentielles est importante et que les mesures correspondantes doivent être compensées.

Pour obtenir la composante tangentielle $F_x$ d'une force F quelconque exercée sur la surface de détection S, comme représenté à la figure 17, on prend en compte les compensations précédemment décrites en utilisant par exemple la relation suivante :

$$F_x = \beta[(F_R - F_t(1, F_N, B_x)) - (F_L - F_t(-1, F_N, B_x))]$$

avec $F_R$ et $F_L$ la résultante des efforts mesurés 40 sur les structures de détection des surfaces latérales situées à $x = 1$ et $x = -1$, respectivement. $\beta$ est un paramètre qui dépend de la nature du milieu déformable et des dimensions du capteur. Si la force exercée sur la surface de détection S est normale à la surface de fond de la cavité et centrée, comme illustré à la figure 15, les efforts 40 mesurés sur les 2 surfaces latérales opposées du capteur sont similaires. Dans le cas contraire et comme illustré à la figure 17, les efforts 40 sont plus importants sur une surface latérale que sur l'autre, permettant de déterminer la direction de la force F dans la direction correspondante.

La composante tangentielle $F_y$ peut être calculée en utilisant une méthode similaire.

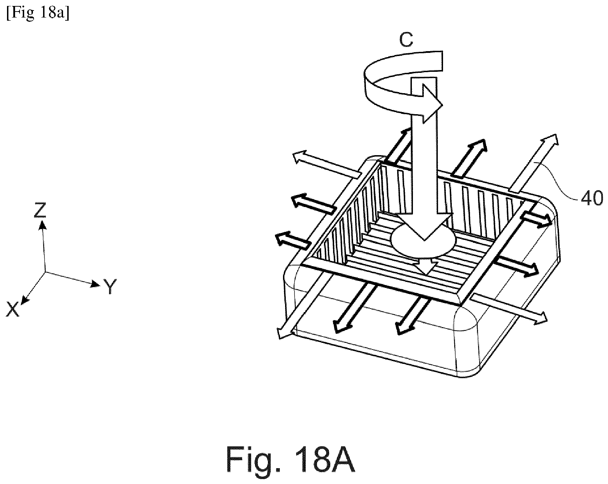

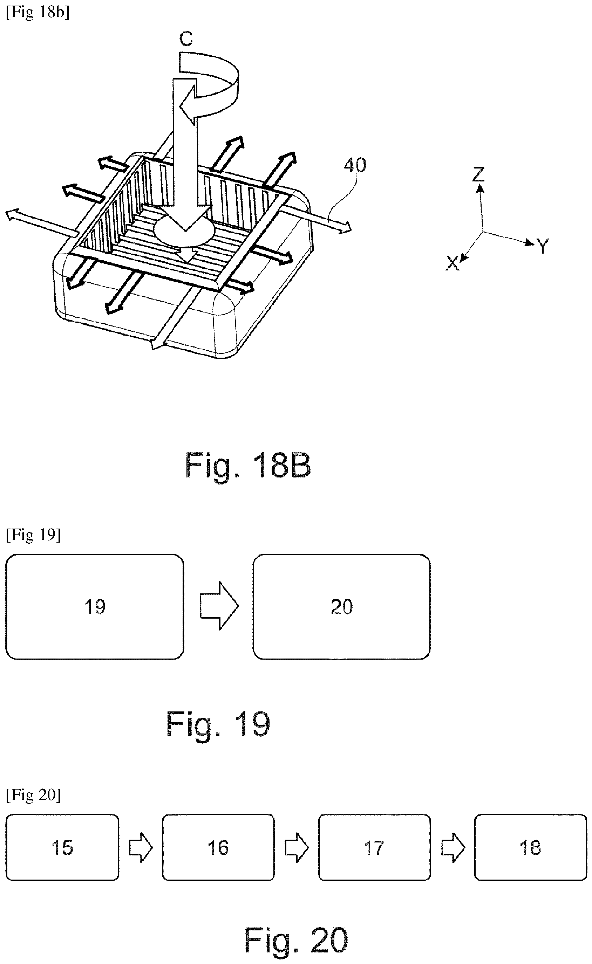

Si cela est souhaité, on peut déterminer à l'étape 13 le moment C de la force F exercée sur le capteur 1, à partir de distributions de pression détectées par des structures de détection sur des surfaces opposées de la cavité. On a illustré à titre d'exemple à la figure 18a la distribution des efforts 40 exercés sur les surfaces latérales de la cavité lorsqu'une force normale de moment positif est appliquée au centre du capteur, et similairement, à la figure 18b, la distribution des efforts 40 lorsqu'une force de moment positif est appliquée au même point. Le moment $Q_N$ est obtenu grâce à la relation suivante :

$$Q_N = \gamma(\nabla l + \nabla r + \nabla + \nabla d)$$

avec $\nabla l, \nabla r, \nabla u, \nabla d$ les gradients des efforts mesurés 40 sur chacune des surfaces latérales de la cavité du capteur. $\gamma$ est un facteur dépendant de la nature du milieu déformable 4 et des dimensions du capteur.

L'ensemble des paramètres ($\alpha, \beta, \sigma, \gamma$) peut être déterminé au cours d'une phase de calibration durant laquelle le capteur est soumis à des sollicitations connues, que l'on compare aux efforts mesurés. La calibration peut être réalisée de plusieurs façons. On peut par exemple utiliser un modèle tel qu'une régression linéaire ou non linéaire afin de trouver les paramètres qui minimisent un critère d'erreur entre la mesure et le modèle, le critère d'erreur étant par exemple choisi selon les méthodes connues de *Mean Square Error* (MSE), *Root Mean Square Error* (RMSE), *Mean Absolute Error* (MAE), ou autre.

La méthode de détermination des composantes d'une force exercée sur le capteur n'est pas limitée au modèle qui vient d'être décrit, notamment si la surface de détection du capteur est de forme relativement complexe. On peut par exemple utiliser un réseau de neurones pré-entraîné pour obtenir la force appliquée sur la surface de détection et déterminée en fonction des signaux détectés par les structures de détection. Le cas échéant, l'entraînement du réseau de neurones a lieu au préalable durant une phase de calibration, comme représenté à l'étape 19 de la figure 19 où, similairement au modèle précédemment décrit, on mesure les efforts exercés sur les structures de détection lorsqu'on soumet le capteur à des sollicitations connues, afin de fournir au réseau de neurones des exemples pour son apprentissage. Une fois le réseau de neurones entraîné pour un capteur donné, on peut l'utiliser à l'étape 20 pour déterminer toute sortes de forces exercées sur sa surface de détection. Outre le réseau de neurones, d'autres algorithmes de *machine learning* peuvent être utilisés, comme par exemple les méthodes *Support Vector Machine* (SVR), *Gradient-Boosting,* ou encore *Random forest.*

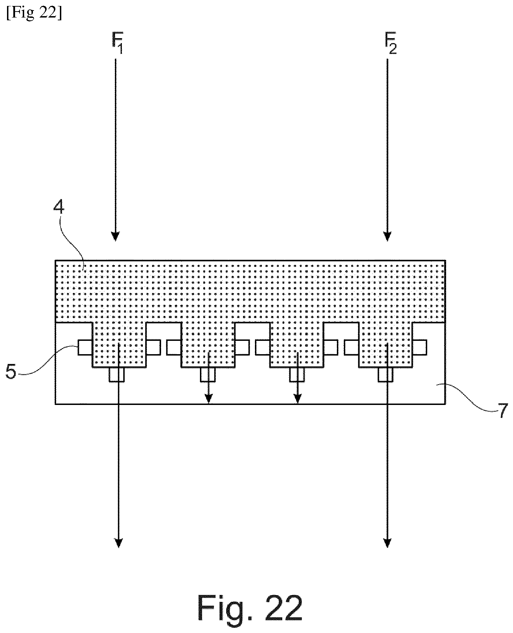

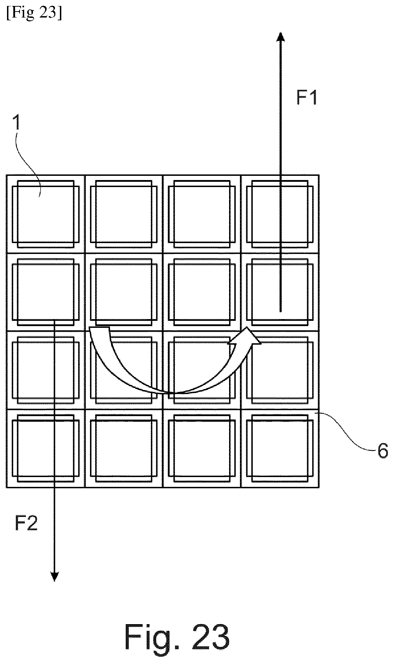

Dans le cas d'un capteur comportant une matrice 9 de cellules de détection unitaires 6, un seul circuit de traitement 8 peut par exemple traiter l'ensemble des signaux de la matrice 9 afin par exemple de calculer la distribution de la ou des forces exercées sur la surface de détection S du dispositif, et/ou le moment correspondant auxdites forces. Ce procédé est illustré à la figure 20. A l'étape 15 et similairement à ce qui vient d'être décrit, on mesure pour chaque cellule de détection 6 la tension sur la zone de mesure unique 5 de chaque structure de détection 3. A l'étape 16, on estime la pression exercée sur la structure de détection 5 en fonction de la tension mesurée et l'on calcule les composantes de la force exercée sur les cellules de détection unitaires 6 suivant la même méthode que décrite précédemment, avec ou sans compensation des pressions tangentielles dues à un effort normal. A l'étape 17, on obtient avantageusement à partir des forces calculées une distribution de forces sur l'ensemble de la matrice 9, ce qui peut apporter de nouvelles informations sur la nature des efforts exercées sur le capteur. Il est notamment possible de détecter et quantifier un contact « multitouche », c'est-à-dire l'application simultanée d'au moins deux forces distinctes, comme illustré à la figure 22. A l'étape 18 et comme illustré à la figure 23, on peut calculer le moment $\vec{Q}_t$ d'une force exercée sur le capteur comportant la matrice 9 de cellules de détection unitaires 6, à partir des forces $\vec{F}_i$ estimées pour chaque cellule de détection unitaire 6 et de la relation suivante :

$$\vec{Q}_t = \sum \vec{r}_i \times \vec{F}_i$$

où l'on somme sur le nombre de capteurs unitaires et le vecteur $\vec{r}_i$ désigne le vecteur position entre le centre de la cellule de détection unitaire $i$ et le point par rapport auquel le moment est calculé, c'est-à-dire le point d'application de la force totale.

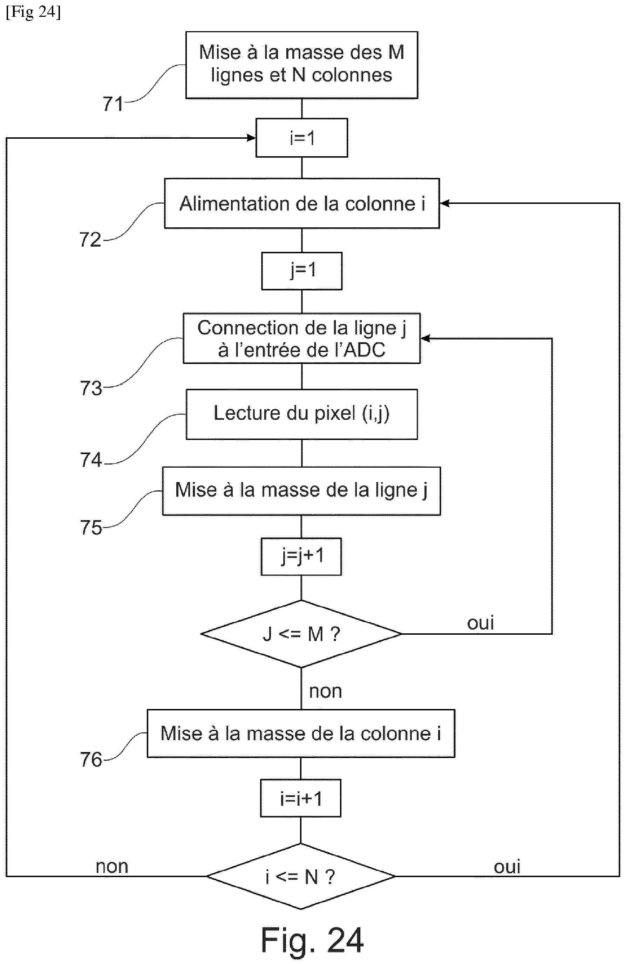

Lorsque le capteur comporte des structures de détection 3 multipoint présentant une disposition matricielle des électrodes résultant en une grille de zones de mesure comme par exemple illustré à la figure 4, on peut mettre en oeuvre un procédé de lecture des zones de mesure 5 par balayage tel que celui représenté à la figure 24. Ce procédé, décrit ci-après, utilise une méthode similaire à celle proposée dans l'article « The UnMousePad - An Interpolating Multi-Touch Force-Sensing Input Pad » de Rosenberg et. A1 (ACM SIGGRAPH 2009 papers. 2009. 1-9).

Dans l'exemple considéré, N désigne le nombre d'électrodes disposées une face de la structure de détection 3, soit le nombre de colonnes de la grille, M désigne le nombre d'électrodes disposées sur la face opposée de la structure de détection 3, soit le nombre de lignes de la grille. Comme décrit précédemment, le croisement des électrodes définit les zones de mesure 5. A la première étape 71 du procédé de lecture, on met l'ensemble des électrodes à la masse. On répète ensuite les étapes suivantes, pour i entier compris en 1 et N

- A l'étape 72, on alimente l'électrode i, et
- On répète, pour j entier compris entre 1 et M :

  o A l'étape 73, on connecte l'électrode j à l'entrée d'un circuit de lecture,
  o A l'étape 74, on lit le signal sur la zone de mesure correspondant à l'intersection des électrodes i et j, et,
  o A l'étape 75, on met à la masse l'électrode j, et

- On met à la masse l'électrode i.

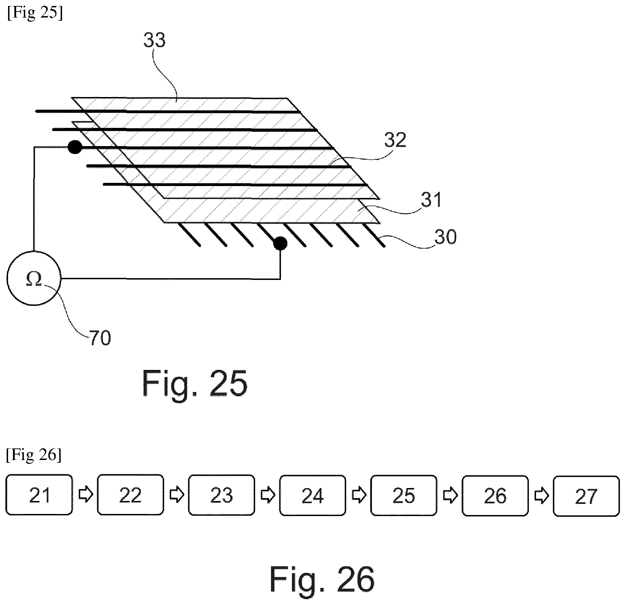

Cette méthode de lecture séquentielle, en alimentant tour à tour chacune des zones de mesure 5 tel qu'illustré à la figure 25, tout en connectant les autres électrodes à la masse (non représenté à la figure 25), permet avantageusement de limiter les artéfacts de mesure, tels que des signaux « fantômes », liés aux chemins de fuite du courant au sein de la structure de détection. Les composants électroniques, grâce au multiplexage des voies, peuvent de plus être mutualisés, ce qui peut réduire le coût de fabrication du capteur. En variante, plusieurs convertisseurs analogique/numérique peuvent être utilisés avec ou non multiplexage des voies, notamment un convertisseur par électrode j connectée au circuit de lecture.

Un capteur selon l'invention peut être fabriqué en suivant par exemple les étapes du procédé illustré à la figure 26. A l'étape 21, on imprime sur une première couche de matériau faiblement conducteur 31 au moins une première électrode 30 ayant par exemple une forme linéaire. A l'étape 22, on imprime sur une deuxième couche 33 de matériau faiblement conducteur au moins une deuxième électrode 32, notamment similaire à la première électrode. On assemble à l'étape 23 les couches 31 et 33 de façon à ce que les électrodes 30 et 32 soient sur les faces extérieures de l'ensemble et que l'électrode 32 croise, en vue de face, l'électrode 30. On découpe ensuite à l'étape 23 l'ensemble obtenu dans une forme correspondant au patron de la cavité 2, avant de l'intégrer à l'étape 24 au support 7, une structure de détection 3 se retrouvant ainsi sur chaque surface de la cavité. A l'étape 25, on remplit au moins partiellement la cavité avec un matériau élastiquement déformable, notamment un élastomère, et on connecte électriquement chaque électrode du capteur ainsi obtenu à l'étape 26 ; cette dernière pouvant avant lieu avant l'étape 25 le cas échéant.

Bien entendu, l'invention n'est pas limitée aux exemples qui viennent d'être décrits.

Par exemple, la détection des pressions exercées sur les structures de détection 3 n'est pas nécessairement obtenue par mesure résistive. Elle peut par exemple se faire par mesure capacitive, en remplaçant par exemple le matériau conducteur par un matériau à constante diélectrique élevée, et en soumettant par exemple les électrodes de mesure à des tensions alternatives, ou tout autre méthode adaptée pour mesurer une capacité.

La cavité peut être de toute forme, et de toute profondeur selon les besoins. Par exemple, elle peut être très peu profonde. Les dimensions du capteur correspondant peuvent varier par exemple de quelques millimètres à quelques centimètres de largeur et longueur, et l'épaisseur est par exemple de quelques millimètres.

Le capteur peut en outre être équipé pour mesurer d'autres quantités en plus de la force exercé sur sa surface de détection. Il peut par exemple comporter des moyens de mesure pour estimer la température d'un objet exerçant une force sur sa surface de détection, notamment grâce à un capteur de température sous la surface de fond de la cavité. Une couche piézo-électrique peut être ajoutée afin de mesurer d'éventuelles vibrations ou accélérations.

Le capteur selon l'invention peut être utilisé, entre autres, pour des applications de robotique, notamment dans le cadre de la manipulation robotique dextre d'objets. Il permet par exemple d'améliorer les qualités de manipulation d'objets par des robots, notamment de détecter et d'identifier le glissement de ces objets.

Dans d'autres exemples d'application, le capteur est intégré à une interface tactile homme-machine.

**Revendications**

1. Capteur de force (1) comportant :

   o Au moins une cavité (2) définie par un support rigide creux (7), la cavité définissant au moins deux surfaces de cavité (2a, 2b) ayant des orientations différentes, la cavité (2) ayant de préférence la forme d'un polyèdre, notamment un pavé

    o sur chacune desdites surfaces de cavité (2a, 2b), au moins une structure de détection respective (3) portée par le support rigide creux (7) et sensible à une pression s'exerçant sur la surface de mesure correspondante, l'une au moins des structures de détection (3) comportant de préférence des moyens de détection piézo-résistifs ou capacitifs, de préférence piézo-résistifs et,

    o un milieu élastiquement déformable (4) remplissant au moins partiellement la cavité (2) en venant au contact desdites surfaces de mesure, et définissant une surface de détection (S) sur laquelle une force à détecter est susceptible de s'exercer, l'application de cette force étant susceptible d'engendrer des contraintes (40) sur chaque structure de détection (3) du fait de la transmission des efforts par ledit milieu (4).

2. Capteur selon la revendication 1, le milieu élastiquement déformable (4) remplissant la cavité (2) de manière à venir à affleurement de son ouverture et/ou s'étendant hors de la cavité.

3. Capteur selon l'une des revendications précédentes, la surface de détection (S) définie par le milieu élastiquement déformable présentant une forme convexe vers l'extérieur, notamment une forme de dôme.

4. Capteur selon l'une quelconque des revendications précédentes, au moins l'une des structures de détection (3) étant multipoint de mesure ou étant mono-point de mesure.

5. Capteur selon l'une quelconque des revendications précédentes, l'une au moins des structures de détection (3), et notamment chaque structure de détection (3), comportant :

    o au moins une première électrode (30) disposée sur la face de la structure de détection du côté d'un support (7) sous-jacent, notamment en contact avec celui-ci, et

    o au moins une deuxième électrode (32) disposée sur la face de la structure de détection du côté du milieu élastiquement déformable (4), notamment en contact avec celui-ci, de préférence les première et deuxième électrodes se superposant au moins partiellement, les première et deuxième électrodes ayant notamment chacune une forme linéaire

6. Capteur selon l'une quelconque des revendications précédentes, au moins l'une des structures de détection (3), mieux chacune d'entre elles, comportant :

    o Une pluralité de premières électrodes (30) disposées sur la face de la structure de détection du côté d'un support (7) sous-jacent, notamment en contact avec celui-ci, et

    o Une pluralité de deuxièmes électrodes (32) disposées sur la face de la structure de détection du côté du milieu élastiquement déformable (4), notamment en contact avec celui-ci.

7. Capteur selon la revendication 6, les premières électrodes comportant des portions parallèles espacées, les deuxièmes électrodes comportant des portions parallèles espacées croisant les premières portions quand vues selon l'axe perpendiculaire au plan défini par lesdites premières portions, notamment leur étant perpendiculaires.

8. Capteur selon l'une quelconque des revendications 5 à 7, la ou les premières électrodes (30) étant imprimées sur une première couche de matériau faiblement conducteur (31), la ou les deuxièmes électrodes (32) étant imprimées sur une deuxième couche de matériau faiblement conducteur (33), les première et deuxième couches étant par la suite assemblées de façon à ce que les électrodes soient situées sur les faces extérieures de l'ensemble.

9. Capteur selon l'une quelconque des revendications précédentes, comportant en outre un circuit de traitement (8) de signaux délivrés par les structures de détection (3), représentatifs des pressions induites sur ces structures par la force s'appliquant sur la surface de détection (S), et configuré pour les traiter afin de calculer au moins une composante de ladite force.

10. Capteur selon la revendication précédente, le circuit de traitement (8) étant configuré pour mesurer une distribution des pressions sur au moins l'une des structures de détection (3).

11. Capteur selon l'une des revendications 9 ou 10, le circuit de traitement (8) étant configuré pour mesurer au moins une composante du moment de la force s'exerçant sur la surface de détection (S) à partir de distributions de pression détectées par des structures de détection présentes sur des surfaces opposées (2b) de la cavité.

**12.** Capteur selon l'une quelconque des revendications précédentes, comportant une pluralité de cellules de détection unitaires (6), formées chacune d'une cavité unitaire (2) équipée uniquement de structures de détection (3) mono-point, le milieu déformable (4) s'étendant de préférence dans chacune des cavités unitaires (2) et définissant une surface de détection (S) sur laquelle une force à détecter est susceptible de s'exercer.

**13.** Capteur selon l'une quelconque des revendications précédentes, le circuit de traitement (8) étant configuré pour mesurer au moins une composante d'une force unitaire susceptible de s'exercer sur une cellule de détection unitaire (6) à partir des pressions détectées par les structures de détection (3) mono-point de ladite cellule de détection (6), le circuit de traitement (8) étant de préférence configuré pour mesurer la distribution d'au moins une composante d'au moins une force susceptible de s'exercer sur la surface de détection (S) du capteur à partir de la connaissance des forces unitaires s'appliquant sur les cellules de détection (6).

**14.** Procédé pour mesurer au moins une composante d'une force exercée sur la surface de détection (S) d'un capteur (1) tel que défini dans l'une quelconque des revendications 1 à 13, comportant les étapes consistant à :

  o Mesurer les perturbations électriques induites par des contraintes (40) s'exerçant sur la ou les zones de mesure (5) des structures de détection du capteur du fait de la transmission des efforts du milieu élastiquement déformable (4) définissant la surface de détection (3),
  o calculer à partir des perturbations ainsi mesurées au moins une composante de la force exercée sur le capteur.

**15.** Procédé selon la revendication précédente quand le capteur (1) est défini par l'une quelconque des revendications 5 à 8, au moins l'une des structures de détection (3) étant multipoint, procédé dans lequel on mesure une distribution de pression sur ladite structure de détection (3), et de préférence dans lequel on calcule au moins une composante du moment de la force exercée à partir de la mesure des champs de pression sur des structures de détection (3) présentes sur des surfaces opposées (2b) de la cavité (2) et/ou de préférence dans lequel la force appliquée sur la surface de détection (S) est déterminée en fonction des signaux détectés par les structures de détection (3) grâce à un réseau de neurones entraîné et/ou de préférence dans lequel on lit les perturbations détectées sur l'ensemble des points de mesure (5) d'une structure de détection (3) présentant une disposition matricielle des électrodes avec des électrodes de lignes (32) et des électrodes de colonnes (30), M désignant le nombre de lignes et de N désignant le nombre de colonnes, le croisement des électrodes définissant des points de mesure (5), procédé comportant les étapes suivantes :

  o On met l'ensemble des électrodes (30,32) à la masse, et
  o On répète, pour i entier compris en 1 et N :

    - On alimente l'électrode i, et
    - On répète, pour j entier compris entre 1 et M :

      o On connecte l'électrode j à l'entrée d'un circuit de lecture,
      o On lit le signal sur le point de mesure (5) correspondant à l'intersection des électrodes i et j, et,
      o On met à la masse l'électrode j, et

    - On met à la masse l'électrode i.

**16.** Procédé de fabrication d'un capteur de force (1) tel que défini dans l'une quelconque des revendications 1 à 13, dans lequel :

  o on imprime sur une première couche de matériau faiblement conducteur (31) électrique au moins une première électrode (30) ayant une forme linéaire,
  o on imprime sur une deuxième couche de matériau faiblement conducteur (33) électrique au moins une deuxième électrode (32) ayant une forme linéaire,
  o on assemble les première et deuxième couches (31, 33) de façon à ce que les électrodes (30, 32) soient sur les faces extérieures de l'ensemble et que la deuxième électrode (32) croise la première électrode (30), quand vue selon l'axe perpendiculaire au plan défini par la première électrode (30),
  o on intègre l'ensemble ainsi obtenu à un support (7) en creux, l'ensemble définissant les faces d'une cavité,
  o on remplit au moins partiellement la cavité avec un matériau (4) élastiquement déformable, notamment un élastomère.

**EP 4 016 026 B1**

**Patentansprüche**

1. Kraftsensor (1), umfassend:

   o mindestens einen Hohlraum (2), der durch einen hohlen starren Träger (7) definiert wird, wobei der Hohlraum mindestens zwei Hohlraumoberflächen (2a, 2b), aufweisend unterschiedliche Orientierungen, definiert, wobei der Hohlraum (2) vorzugsweise die Form eines Polyeders, insbesondere eines Blocks, aufweist
   o auf jeder der Hohlraumoberflächen (2a, 2b) mindestens eine jeweilige Erfassungsstruktur (3), die von dem hohlen starren Träger (7) getragen wird und auf einen Druck anspricht, der auf die entsprechende Messoberfläche ausgeübt wird, wobei mindestens eine der Erfassungsstrukturen (3) vorzugsweise piezoresistive oder kapazitive, vorzugsweise piezoresistive Erfassungsmittel umfasst, und
   o ein elastisch verformbares Medium (4), das den Hohlraum (2) mindestens teilweise ausfüllt, indem es mit den Messoberflächen in Kontakt kommt und eine Erfassungsoberfläche (S) definiert, auf die eine zu erfassende Kraft ausgeübt werden kann, wobei die Anwendung dieser Kraft aufgrund der Übertragung der Kräfte durch das Medium (4) Spannungen (40) auf jeder Erfassungsstruktur (3) verursachen kann.

2. Sensor nach Anspruch 1, wobei das elastisch verformbare Medium (4) den Hohlraum (2) so ausfüllt, dass es bündig mit dessen Öffnung abschließt und/oder sich aus dem Hohlraum heraus erstreckt.

3. Sensor nach einem der vorhergehenden Ansprüche, wobei die durch das elastisch verformbare Medium definierte Erfassungsoberfläche (S) eine nach außen konvexe Form, insbesondere eine Kuppelform, annimmt.

4. Sensor nach einem der vorhergehenden Ansprüche, wobei mindestens eine der Erfassungsstrukturen (3) mit mehreren Messpunkten oder mit einem Messpunkt ausgebildet ist.

5. Sensor nach einem der vorhergehenden Ansprüche, wobei mindestens eine der Erfassungsstrukturen (3), und insbesondere jede Erfassungsstruktur (3), umfasst:

   o mindestens eine erste Elektrode (30), die auf der Seite der Erfassungsstruktur auf Höhe eines darunter liegenden Trägers (7) angeordnet ist, insbesondere in Kontakt mit diesem, und
   o mindestens eine zweite Elektrode (32), die auf der Seite der Erfassungsstruktur auf Höhe des elastisch verformbaren Mediums (4) angeordnet ist, insbesondere in Kontakt mit diesem, wobei sich die erste und die zweite Elektrode vorzugsweise mindestens teilweise überlagern, wobei die erste und die zweite Elektrode insbesondere jeweils eine lineare Form aufweisen.

6. Sensor nach einem der vorhergehenden Ansprüche, wobei mindestens eine der Erfassungsstrukturen (3), besser jede von ihnen, umfasst:

   o eine Vielzahl erster Elektroden (30), die auf der Seite der Erfassungsstruktur auf Höhe eines darunter liegenden Trägers (7) angeordnet sind, insbesondere in Kontakt mit diesem, und
   o eine Vielzahl zweiter Elektroden (32), die auf der Seite der Erfassungsstruktur auf Höhe des elastisch verformbaren Mediums (4) angeordnet sind, insbesondere in Kontakt mit diesem.

7. Sensor nach Anspruch 6, wobei die ersten Elektroden beabstandete parallele Abschnitte umfassen und die zweiten Elektroden beabstandete parallele Abschnitte umfassen, die die ersten Abschnitte kreuzen, wenn sie entlang der Achse senkrecht zu der Ebene gesehen werden, die durch die ersten Abschnitte definiert wird, insbesondere senkrecht zu ihnen.

8. Sensor nach einem der Ansprüche 5 bis 7, wobei die erste oder ersten Elektroden (30) auf eine erste Schicht aus schwach leitendem Material (31) gedruckt sind, die zweite oder zweiten Elektroden (32) auf eine zweite Schicht aus schwach leitendem Material (33) gedruckt sind, wobei die erste und die zweite Schicht anschließend so zusammengesetzt werden, dass sich die Elektroden auf den Außenseiten der Anordnung befinden.

9. Sensor nach einem der vorhergehenden Ansprüche, ferner umfassend eine Schaltung zur Verarbeitung (8) von Signalen, die von den Erfassungsstrukturen (3) bereitgestellt werden und die Drücke darstellen, die auf diese Strukturen durch die auf die Erfassungsoberfläche (S) wirkende Kraft induziert werden, und die so konfiguriert ist, dass sie diese verarbeitet, um mindestens eine Komponente der Kraft zu berechnen.

15

**10.** Sensor nach dem vorhergehenden Anspruch, wobei die Verarbeitungsschaltung (8) so konfiguriert ist, dass sie eine Druckverteilung über mindestens eine der Erfassungsstrukturen (3) misst.

**11.** Sensor nach einem der Ansprüche 9 oder 10, wobei die Verarbeitungsschaltung (8) so konfiguriert ist, dass sie mindestens eine Komponente des Moments der auf die Erfassungsoberfläche (S) wirkenden Kraft aus Druckverteilungen misst, die von Erfassungsstrukturen erfasst werden, die auf gegenüberliegenden Oberflächen (2b) des Hohlraums vorhanden sind.

**12.** Sensor nach einem der vorhergehenden Ansprüche, umfassend eine Vielzahl von einzelnen Erfassungszellen (6), die jeweils aus einem einzelnen Hohlraum (2) gebildet sind, der nur mit Einpunkt-Erfassungsstrukturen (3) ausgestattet ist, wobei sich das verformbare Medium (4) vorzugsweise in jeden der einzelnen Hohlräume (2) erstreckt und eine Erfassungsoberfläche (S) definiert, auf die eine zu erfassende Kraft einwirken kann.

**13.** Sensor nach einem der vorhergehenden Ansprüche, wobei die Verarbeitungsschaltung (8) so konfiguriert ist, dass sie mindestens eine Komponente einer einzelnen Kraft, die auf eine einzelne Erfassungszelle (6) wirken kann, anhand der Drücke misst, die von den Einpunkt-Erfassungsstrukturen (3) der Erfassungszelle (6) erfasst werden, wobei die Verarbeitungsschaltung (8) vorzugsweise so konfiguriert ist, dass sie die Verteilung mindestens einer Komponente mindestens einer Kraft misst, die auf die Erfassungsoberfläche (S) des Sensors ausgehend von der Kenntnis der auf die Erfassungszellen (6) wirkenden einzelnen Kräfte ausgeübt werden kann.

**14.** Verfahren zum Messen mindestens einer Komponente einer Kraft, die auf die Erfassungsoberfläche (S) eines Sensors (1), wie in einem der Ansprüche 1 bis 13 definiert, ausgeübt wird, umfassend die folgenden Schritte:

o Messen von elektrischen Störungen, die durch Spannungen (40) induziert werden, die auf die Messzone(n) (5) der Erfassungsstrukturen des Sensors aufgrund der Übertragung von Kräften des elastisch verformbaren Mediums (4), das die Erfassungsoberfläche (3) definiert, ausgeübt werden,
o Berechnen aus den so gemessenen Störungen mindestens einer Komponente der auf den Sensor ausgeübten Kraft.

**15.** Verfahren nach dem vorhergehenden Anspruch, wenn der Sensor (1) durch einen der Ansprüche 5 bis 8 definiert ist, wobei mindestens eine der Erfassungsstrukturen (3) mehrpunktförmig ist, wobei in dem Verfahren eine Druckverteilung auf der Erfassungsstruktur (3) gemessen wird, und vorzugsweise bei dem mindestens eine Komponente des Moments der ausgeübten Kraft aus der Messung der Druckfelder auf Erfassungsstrukturen (3), die auf gegenüberliegenden Oberflächen (2b) des Hohlraums (2) vorhanden sind, berechnet wird und/oder vorzugsweise bei dem die auf die Erfassungsoberfläche (S) ausgeübte Kraft in Abhängigkeit von den Signalen, die von den Erfassungsstrukturen (3) erfasst werden, mittels eines trainierten neuronalen Netzes ermittelt wird und/oder vorzugsweise bei dem die erfassten Störungen an allen Messpunkten (5) einer Erfassungsstruktur (3), die ein Matrixmuster der Elektroden mit Zeilenelektroden (32) und Spaltenelektroden (30) annimmt, ausgelesen werden, wobei M die Anzahl der Zeilen und N die Anzahl der Spalten bezeichnet, wobei die Kreuzung der Elektroden Messpunkte (5) definiert, das Verfahren umfassend die folgenden Schritte:

o Anlegen aller Elektroden (30, 32) an die Masse und
o Wiederholen für die ganze Zahl i, die zwischen 1 und N umfasst ist:

- Versorgen der Elektrode i und
- Wiederholen für die ganze Zahl j, die zwischen 1 und M umfasst ist:

o Verbinden der Elektrode j mit dem Eingang einer Ableseschaltung,
o Auslesen des Signals an dem Messpunkt (5), der dem Schnittpunkt der Elektroden i und j entspricht, und
o Anlegen der Elektrode j an die Masse und

- Anlegen der Elektrode i an die Masse.

**16.** Verfahren zur Herstellung eines Kraftsensors (1), wie in einem der Ansprüche 1 bis 13 definiert, wobei:

o auf eine erste Schicht aus elektrisch schwach leitendem Material (31) mindestens eine erste Elektrode (30) gedruckt wird, die eine lineare Form annimmt,

o auf eine zweite Schicht aus elektrisch schwach leitendem Material (33) mindestens eine zweite Elektrode (32) gedruckt wird, die eine lineare Form annimmt,

o die erste und die zweite Schicht (31, 33) so zusammengesetzt werden, dass sich die Elektroden (30, 32) auf den Außenseiten der Anordnung befinden und die zweite Elektrode (32) die erste Elektrode (30) kreuzt, wenn man sie entlang der Achse senkrecht zu der von der ersten Elektrode (30) definierten Ebene betrachtet,

o die so erhaltene Anordnung in einen ausgehöhlten Träger (7) integriert wird, wobei die Anordnung die Seiten eines Hohlraums definiert,

o der Hohlraum mindestens teilweise mit einem elastisch verformbaren Material (4), insbesondere einem Elastomer, ausgefüllt wird.

**Claims**

1. Force sensor (1) comprising:

   o at least one cavity (2) defined by a hollow rigid support (7), the cavity defining at least two cavity surfaces (2a, 2b) having different orientations, the cavity (2) preferably having the shape of a polyhedron, in particular a box

   o on each of said cavity surfaces (2a, 2b), at least one respective sensing structure (3) carried by the hollow rigid support (7) and sensitive to a pressure exerted on the corresponding measuring surface, at least one of the sensing structures (3) preferably comprising piezo-resistive or capacitive, preferably piezo-resistive sensing means, and

   o an elastically deformable medium (4) at least partially filling the cavity (2), coming into contact with said measuring surfaces and defining a sensing surface (S) on which a force to be sensed is likely to be exerted, the application of this force being capable of generating strain (40) in each sensing structure (3) because of the transmission of forces by said medium (4).

2. Sensor according to Claim 1, the elastically deformable medium (4) filling the cavity (2) so as to come flush with its opening and/or extending out of the cavity.

3. Sensor according to one of the preceding claims, the sensing surface (S) defined by the elastically deformable medium having an outwardly convex shape, in particular a dome shape.

4. Sensor according to any one of the preceding claims, at least one of the sensing structures (3) being a multipoint measurement or a single-point measurement structure.

5. Sensor according to any one of the preceding claims, at least one of the sensing structures (3), and in particular each sensing structure (3), comprising:

   o at least one first electrode (30) arranged on the face of the sensing structure on the side of an underlying support (7), in particular in contact with the latter, and

   o at least one second electrode (32) arranged on the face of the sensing structure on the side of the elastically deformable medium (4), in particular in contact with the latter, the first and second electrodes preferably being at least partially mutually superposed, the first and second electrodes each in particular having a linear shape.

6. Sensor according to any one of the preceding claims, at least one of the sensing structures (3), and preferably each of them, comprising:

   o a plurality of first electrodes (30) arranged on the face of the sensing structure on the side of an underlying support (7), in particular in contact with the latter, and

   o a plurality of second electrodes (32) arranged on the face of the sensing structure on the side of the elastically deformable medium (4), in particular in contact with the latter.

7. Sensor according to Claim 6, the first electrodes comprising mutually-spaced parallel portions, the second electrodes comprising mutually-spaced parallel portions intersecting the first portions when viewed along the axis perpendicular to the plane defined by said first portions, in particular being perpendicular thereto.

8. Sensor according to any one of Claims 5 to 7, the first electrode (s) (30) being printed on a first layer of weakly conductive material (31), the second electrode(s) (32) being printed on a second layer of weakly conductive material (33), the first and second layers then being assembled so that the electrodes are located on the outer faces of the assembly.

9. Sensor according to any one of the preceding claims, further comprising a processing circuit (8) for processing signals delivered by the sensing structures (3) and representative of the pressures induced on these structures by the force applied to the sensing surface (S), and configured to process them in order to calculate at least one component of said force.

10. Sensor according to the preceding claim, the processing circuit (8) being configured to measure a distribution of the pressures over at least one of the sensing structures (3).

11. Sensor according to one of Claims 9 or 10, the processing circuit (8) being configured to measure at least one component of the moment of the force exerted on the sensing surface (S) from pressure distributions sensed by sensing structures present on opposing surfaces (2b) of the cavity.

12. Sensor according to any one of the preceding claims, comprising a plurality of unit sensing cells (6), each formed of a unit cavity (2) equipped only with single-point sensing structures (3), the deformable medium (4) preferably extending into each of the unit cavities (2) and defining a sensing surface (S) on which a force to be sensed is likely to be exerted.

13. Sensor according to any one of the preceding claims, the processing circuit (8) being configured to measure at least one component of a unit force likely to be exerted on a unit sensing cell (6) from pressures sensed by the single-point sensing structures (3) of said sensing cell (6), the processing circuit (8) preferably being configured to measure the distribution of at least one component of at least one force likely to be exerted on the sensing surface (S) of the sensor from knowledge of the unit forces applied to the sensing cells (6).

14. Method for measuring at least one component of a force exerted on the sensing surface (S) of a sensor (1) as defined in any one of Claims 1 to 13, comprising the steps consisting in:

   o measuring the electrical disturbances induced by strain (40) applied to the measuring zone or zones (5) of the sensing structures of the sensor as a result of the transmission of the forces by the elastically deformable medium (4) defining the detection surface (3),
   o calculating, from the disturbances thus measured, at least one component of the force exerted on the sensor.

15. Method according to the preceding claim when the sensor (1) is defined by any one of Claims 5 to 8, at least one of the sensing structures (3) being a multipoint structure, the method being a method wherein a distribution of the pressure on said sensing structure (3) is measured, and preferably wherein at least one component of the moment of the force exerted is calculated from the measurement of the pressure fields on sensing structures (3) present on opposing surfaces (2b) of the cavity (2) and/or preferably wherein the force applied to the sensing surface (S) is determined on the basis of the signals detected by the sensing structures (3) by means of a trained neural network and/or preferably wherein the disturbances sensed are read across all of the measurement points (5) of a sensing structure (3) having a matrix arrangement of electrodes with row electrodes (32) and column electrodes (30), M being the number of rows and N being the number of columns, the intersections of the electrodes defining measuring points (5), the method comprising the following steps:

   o all of the electrodes (30, 32) are earthed, and
   o for i being an integer comprised between 1 and N, iteratively:

      - power is applied to the electrode i, and
      - for j being an integer comprised between 1 and M, iteratively:

         o the electrode j is connected to the input of a readout circuit,
         o the signal at the measurement point (5) corresponding to the intersection of the electrodes i and j is read, and
         o the electrode j is earthed, and

      - the electrode i is earthed.

**16.** Method for manufacturing a force sensor (1) as defined in any one of Claims 1 to 13, wherein:

> o at least one first electrode (30) having a linear shape is printed on a first layer of weakly electrically conductive material (31),
> o at least one second electrode (32) having a linear shape is printed on a second layer of weakly electrically conductive material (33),
> o the first and second layers (31, 33) are assembled so that the electrodes (30, 32) are on the outer faces of the assembly and so that the second electrode (32) intersects the first electrode (30) when viewed along the axis perpendicular to the plane defined by the first electrode (30),
> o the assembly thus obtained is integrated into a hollow support (7), the assembly defining the faces of a cavity,
> o the cavity is at least partially filled with an elastically deformable material (4), in particular an elastomer.

[Fig 1]

Fig. 1

[Fig 2a]

Fig. 2A

[Fig 2b]

Fig. 2B

[Fig 2c]

Fig. 2C

[Fig 3a]

4

32

3

34

31        30        33

Fig. 3A

[Fig 3b]

4

32

3

30        35

Fig. 3B

[Fig 3c]

4

36 ⟍ 32

34 ⟍ 3

34 ⟍

36    30    37

## Fig. 3C

[Fig 3d]

4

37 ⟍ 3

34 ⟍

36

32    30    32

## Fig. 3D

[Fig 3e]

Fig. 3E

[Fig 3f]

Fig. 3F

[Fig 4]

Fig. 4

[Fig 5]

Fig. 5

[Fig 6]

1

4

31

33

31

33

33

31

32

2b

7

2a

Fig. 6

[Fig 7]

Fig. 7

[Fig 8]

Fig. 8

[Fig 9]

Fig. 9

[Fig 10]

Fig. 10

[Fig 11]

Fig. 11

[Fig 12]

Fig. 12

[Fig 13]

Fig. 13

[Fig 14]

Fig. 14

[Fig 15]

Fig. 15

[Fig 16a]

Fig. 16A

[Fig 16b]

Fig. 16B

[Fig 17]

Fig. 17

[Fig 18a]

Fig. 18A

[Fig 18b]

Fig. 18B

[Fig 19]

Fig. 19

[Fig 20]

Fig. 20

[Fig 21]

F

4

5

7

Fig. 21

[Fig 22]

Fig. 22

[Fig 23]

Fig. 23

[Fig 24]

Fig. 24

EP 4 016 026 B1

[Fig 25]

Fig. 25

[Fig 26]

Fig. 26

43

# EP 4 016 026 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 10067019 B2
- JP 2020016444 A
- EP 1617197 B1
- US 9372588 B2
- US 8411140 B2
- US 8272278 B2
- US 2009200815 A1
- JP 2006305658 A

**Littérature non-brevet citée dans la description**

- **ROSENBERG.** The UnMousePad - An Interpolating Multi-Touch Force-Sensing Input Pad. *ACM SIGGRAPH 2009 papers.*, 2009, 1-9